(19) **Europäisches Patentamt** / **European Patent Office** / **Office européen des brevets**

(11) **EP 4 095 292 A1**

(12) # EUROPEAN PATENT APPLICATION
published in accordance with Art. 153(4) EPC

(43) Date of publication:
**30.11.2022 Bulletin 2022/48**

(21) Application number: **20884194.0**

(22) Date of filing: **15.01.2020**

(51) International Patent Classification (IPC):
**D01F 6/60** (2006.01)   **D01F 1/10** (2006.01)

(52) Cooperative Patent Classification (CPC):
**C08G 69/28; D01D 5/08; D01D 5/088; D01D 5/16; D01D 10/02; D01F 1/10; D01F 6/60; D01F 6/90**

(86) International application number:
**PCT/CN2020/072240**

(87) International publication number:
**WO 2021/088250 (14.05.2021 Gazette 2021/19)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **07.11.2019 CN 201911079612**

(71) Applicants:
- **Cathay Biotech Inc.**
  **Shanghai 201203 (CN)**
- **Cibt America Inc.**
  **Newark DE 19713 (US)**

(72) Inventors:
- **SUN, Chaoxu**
  **Shanghai 201203 (CN)**
- **CHEN, Wanzhong**
  **Shanghai 201203 (CN)**
- **CHEN, Shuyuan**
  **Shanghai 201203 (CN)**
- **SHANG, Zhiguo**
  **Shanghai 201203 (CN)**
- **LIU, Xiucai**
  **Shanghai 201203 (CN)**

(74) Representative: **Vossius & Partner**
**Patentanwälte Rechtsanwälte mbB**
**Siebertstraße 3**
**81675 München (DE)**

(54) **POLYAMIDE 5X INDUSTRIAL YARN, PREPARATION METHOD THEREFOR AND USE THEREOF**

(57)   Disclosed in the present invention is a polyamide 5X industrial yarn. The polyamide 5X industrial yarn has a heat-resistant break strength retention rate of 90% or more after being treated at 180°C for 4 hrs; a heat-resistant break strength retention rate of 90% or more after being treated at 230°C for 30 mins; and a dry heat shrinkage of 8.0% or less. The polyamide 5X industrial yarn is widely used in the fields of sewing threads, tire cords, air bag yarns, release cloth, krama, canvas, safety belts, ropes, fishing nets, industrial filter cloth, conveyor belts, parachutes, tents, bags and suitcases.

EP 4 095 292 A1

## Description

### Technical Field

The present invention relates to the technical field of polyamide materials, and provides a polyamide 5X industrial yarn, a process for producing the same and use thereof.

### Background Art

Industrial yarns can be produced by two processes: one process is a direct melt spinning process, and the other is an indirect chip spinning process by solid phase tackifying. Nowadays, a part of polyamide 66 and polyethylene terephthalate sometimes has been produced by the direct melt spinning process. However, polyamide 6 can not be produced by the direct melt-spinning process now because the polymer contains 8-10 wt% of monomers which need to be removed through a monomer removal process.

Dacron and Chinlon industrial yarns have the properties like high strength, low elongation, good dimensional stability, and being fatigue-resistant and aging-resistant. Therefore, they are widely used in the fields of tire cords, canvas, conveyor belts, air bags, parachutes, ropes, safety belts, industrial filter cloth, tents, or the like. Various application fields impose relatively high requirements on the heat resistance of industrial yarn materials. At present, this is mainly achieved by a method of blending with a heat stabilizer masterbatch added. However, heat stabilizer masterbatches are expensive. Moreover, spinning manufacturers need to be equipped with an online masterbatch device during spinning, which increases equipment investment. In addition, there is also a need to address the compatibility between the heat stabilizer masterbatch and the base material. If the masterbatch is not uniformly added, filaments break during spinning, which will reduce the production yield of the industrial yarns and even affect the mechanical properties of the fibers.

CN 110055602A discloses a high-strength polyamide 56 industrial yarn and a process for producing the same. Conventional polyamide 56 chips are used for spinning, the polyamide 56 chips are not subjected to a heat resistance modification, and the produced industrial yarn has poor heat resistance and cannot be used in fields requiring high heat resistance, such as sewing threads, tire cords, airbag yarns, release cloth, krama and the like. A high-speed winding process is adopted, wherein the winding speed is greater than 4000 m/min. Since the winding speed is high, the residence times of the fibers on different hot rollers are relatively short, that is, the high-temperature setting time of the fibers is shortened. Furthermore, by employing a process with a low drawing ratio, fibers are produced which have a low crystallinity, a low orientation degree, a low strength and a poor dimensional stability.

### Summary of the Invention

A first object of the present invention is to provide a polyamide 5X industrial yarn with both excellent heat resistance and mechanical properties. The polyamide 5X industrial yarn has a heat-resistant break strength retention rate of 90% or more after being treated at 180°C for 4 hrs; a heat-resistant break strength retention rate of 90% or more after being treated at 230°C for 30 mins; and/or a dry heat shrinkage of 8.0% or less. The polyamide 5X comprises any one of polyamide 56, polyamide 510, polyamide 512, polyamide 513 or polyamide 514. Preference is given to polyamide 56 or polyamide 510.

According to the present invention, the quality of polyamide 5X, especially polyamide 56 resin, is optimized by adjusting its viscosity, oligomer content, molecular weight and molecular weight distribution, moisture content. Secondly, the spinning process of the polyamide 5X industrial yarn is optimized, the crystallinity and orientation degree thereof are improved, the setting temperature and winding overfeed ratio are increased, the subsequent stress relaxation is reduced. In this way, the present invention provides a polyamide 56 industrial yarn with excellent mechanical properties and dimensional stability which has a break strength of 6.5 cN/dtex or more; a filament breakage of 2 times or less every 24hrs, a production yield of 90% or more; a shrinkage in boiling water of 8.0% or less; a fineness of 100-3,500 dtex; an elongation at break of 26% or less; a crystallinity of 70% or more; and/or an orientation degree of 80% or more.

During the spinning process of polyamide fibers, it is necessary to control the moisture content of the resins, which is generally required to be within the range of equilibrium moisture content. If the moisture content of the resin is too low during spinning, a melt tackifying reaction occurs during melting, the amino content decreases, and the fluidity of the melt deteriorates, which is unfavorable for subsequent drawing and causes filament breakage and low strength of fibers. If the moisture content is too high, a melt degradation reaction occurs during melting, the amino content increases, which tends to cause filament breakage and eventually leads to a reduced production yield. If the moisture content of polyamide 56 resin is controlled within the range of 300-800 ppm during spinning, the oil-free yarn of the polyamide 56 industrial yarn has a relative viscosity of 2.7-4.5, the absolute value of the difference between the relative viscosity of the oil-free yarn and the relative viscosity of its original resin is 0.12 or less; the oil-free yarn has an amino content of 20-50 mmol/kg, the absolute value of the difference between the amino content of the oil-free yarn and the amino content of its original resin is 5 or less. By reducing the fluctuation ranges in terms of the viscosity and the amino content of the oil-free yarn, the melt uniformity of the polyamide 56 is improved, the filament breakage is decreased, the spinnability can be improved, and the production yield of the polyamide 56 industrial yarn prepared is 90% or more.

A second object of the present invention is to provide a process for producing polyamide 5X industrial yarn, especially polyamide 56 industrial yarn.

A third object of the present invention is to provide a use of the polyamide 5X industrial yarn, especially polyamide 56 industrial yarn, in the fields of sewing threads, tire cords, air bag yarns, release cloth, krama, canvas, safety belts, ropes, fishing nets, industrial filter cloth, conveyor belts, parachutes, tents, bags and suitcases.

In order to achieve the above objects, the present invention provides the following solutions:

[Polyamide 5X Industrial Yarn]

Taking polyamide 56 industrial yarn as an example, the content of copper ions in the polyamide 56 industrial yarn according to the present invention is 10-1,000 ppm, preferably 30-500 ppm, and more preferably 50-200 ppm; the polyamide 56 industrial yarn has a heat-resistant break strength retention rate of 90% or more, preferably 94% or more, and more preferably 98% or more after being treated at 180°C for 4 hrs; and/or a heat-resistant break strength retention rate of 90% or more, preferably 93% or more, and more preferably 96% or more after being treated at 230°C for 30 mins; and/or the polyamide 56 industrial yarn has a dry heat shrinkage of 8.0% or less, preferably 6.0% or less, and more preferably 4.0% or less.

The polyamide 56 industrial yarn comprises a heat stabilizer; preferably, the heat stabilizer comprises any one of copper acetate, potassium iodide, copper chloride, cuprous iodide, copper oxide, cuprous oxide, or combination thereof; preferably, the heat stabilizer is added in an amount of 10-2,800 ppm, and preferably 10-2,500 ppm, based on the total weight of the production raw materials.

Preferably, the heat stabilizer is a composition of copper acetate and potassium iodide, wherein the molar ratio of copper acetate to potassium iodide is 1:1-15, preferably 1:2-10, and more preferably 1:6-8, wherein preferably copper acetate is added in an amount of 100-500 ppm, and potassium iodide is added in an amount of 500-2,500 ppm.

The polyamide 56 industrial yarn has a break strength of 6.5 cN/dtex or more, preferably 7.0 cN/dtex or more, and more preferably 8.0 cN/dtex or more.

The oil-free yarn of the polyamide 56 industrial yarn has a relative viscosity of 2.7-4.5, and the absolute value of the difference between the relative viscosity of the oil-free yarn and the relative viscosity of its original resin is 0.12 or less, preferably 0.10 or less, and more preferably 0.08 or less.

The oil-free yarn of the polyamide 56 industrial yarn has an amino content of 20-50 mmol/kg; and the absolute value of the difference between the amino content of the oil-free yarn and the amino content of its original resin is 5 or less, preferably 3 or less, and more preferably 2 or less.

The filament of the polyamide 56 industrial yarn breaks 2 times or less every 24hrs, preferably 1 time or less every 24hrs, and more preferably 0 time every 24hrs; and the production yield of the polyamide 56 industrial yarn is 90% or more, preferably 93% or more, and more preferably 96% or more.

The polyamide 56 industrial yarn has a shrinkage in boiling water of 8.0% or less, preferably 7.0% or less, and more preferably 6.0% or less; and/or, the polyamide 56 industrial yarn has a fineness of 100-3,500 dtex, preferably 200-2,500 dtex, and more preferably 300-1,800dtex; and/or, the polyamide 56 industrial yarn has an elongation at break of 26% or less, and preferably 22% or less; and/or, the polyamide 56 industrial yarn has a crystallinity of 70% or more, preferably 72% or more, and more preferably 74% or more; and/or, the polyamide 56 industrial yarn has an orientation degree of 80% or more, preferably 82% or more, and more preferably 84% or more.

Raw materials for producing the polyamide 56 industrial yarn at least comprise 1,5-pentane diamine and adipic acid; or a polyamide 56 obtained by polymerizing 1,5-pentane diamine and adipic acid as monomers.

The 1,5-pentane diamine is prepared from bio-based raw materials by a fermentation process or an enzymatic conversion process. Preferably, the 1,5-pentane diamine is prepared from bio-based raw materials by a fermentation process or an enzymatic conversion process. For example, the process for producing 1,5-pentane diamine as disclosed in CN109536542A is employed.

[Process for Producing Polyamide 5X Industrial Yarn]

Taking polyamide 56 industrial yarn as an example, the process comprises the following steps:

wherein the polyamide 56 industrial yarn can be prepared by two processes, namely direct melt spinning process or chip spinning process;

(1) polymerizing 1,5-pentane diamine and adipic acid to obtain a high-viscosity polyamide 56 melt, conveying the melt to a spinning beam by a melt booster pump, and spinning directly; or using polyamide 56 chip to spin, that is, firstly preparing a low-viscosity polyamide 56 resin, then obtaining a high-viscosity polyamide 56 resin by solid phase tackifying, and heating the high-viscosity polyamide 56 resin into a molten state so as to form a polyamide 5X melt for spinning;

wherein in the solid phase tackifying, the viscosity is increased by drying the low-viscosity polyamide 56 resin at a high temperature; preferably, the solid phase tackifying is performed at a temperature of 120-180°C, preferably 150-160°C; the drying time is 10-50 hrs, and preferably 15-30 hrs; in the solid phase tackifying, moisture is removed by drying at a high temperature, and the polycondensation reaction continues to obtain a high-viscosity resin;

(2) drawing the polyamide 56 melt to form an as-spun yarn; and

(3) processing the as-spun yarn to obtain the polyamide 56 industrial yarn.

Wherein a heat stabilizer is added during the polymerization of 1,5-pentane diamine and adipic acid in Step (1), or injected online in the form of a heat stabilizer masterbatch before cutting the polymer melt into pellets, or blended in the form of a heat stabilizer masterbatch during the spinning.

If the polyamide 5X industrial yarn is a polyamide 510 industrial yarn, 1,5-pentane diamine and sebacic acid may be polymerized.

In some embodiments of the present invention, the content of copper ions in the heat stabilizer masterbatch is 0.5-10 wt%, preferably 0.8-5 wt%, and more preferably 1.2-3 wt%.

In some embodiments of the present invention, the heat stabilizer masterbatch is added in an amount of 0.3-5.0 wt%, preferably 0.5-3.0 wt%, and more preferably 0.8-2.0 wt%.

In some embodiments of the present invention, the base material for the heat stabilizer masterbatch is any one of polyamide 6, polyamide 56, polyamide 66, polyamide 510, polyamide 610, polybutylene terephthalate, or combination thereof; preferably polyamide 6, polyamide 56 and/or polyamide 510; and more preferably polyamide 6 and/or polyamide 56.

In some embodiments of the present invention, the process for producing the heat stabilizer masterbatch comprises the following steps:

(1) drying the base material under vacuum or in an inert gas and grinding it into powders;

(2) mixing the powders obtained in Step (1) with a heat stabilizer and other additive(s), and pelletizing the mixture. Specifically, a twin-screw melt extrusion can be used for pelletization. Preferably, the processing temperature of each zone of the twin-screw extruder is 180-285°C, the screw rotation speed is 25-350 r/min, the vacuum degree is -0.1 MPa or less, and the filter screen is in the range of 80-200 mesh. Preferably, the base material is polyamide 56, the processing temperature of each zone of the twin-screw extruder is 260-275°C, the screw rotation speed is 50-350 r/min, the vacuum degree is -0.1 MPa or less, and the filter screen is in the range of 100-150 mesh. The heat stabilizer is added in an amount of 0.5-20 wt %, based on the base material.

In some embodiments of the present invention, the heat stabilizer is a composition of copper acetate and potassium iodide, wherein the molar ratio of copper acetate to potassium iodide is 1:1-15, preferably 1:2-10, and more preferably 1:5-8. In some embodiments of the present invention, the heat stabilizer is cuprous iodide. The other additive(s) at least comprise antioxidants and/or lubricants.

According to the present invention, the polyamide 56 industrial yarn achieves better heat resistance and mechanical properties by adding the above-mentioned heat stabilizer during polymerization. The inventors assume that the reasons might be as follows: firstly, the polyamide 56 melt has good fluidity, so the heat stabilizer can be uniformly distributed in the polyamide 56 resin and has good compatibility with the polyamide 56 resin. Secondly, the polyamide 56 has a structure in an odd-even carbon arrangement with a high proportion of amide bonds, and some amide bonds on different molecular chains are not bonded. After adding a heat stabilizer containing copper ions, copper ions can play a good complexation function among the amide bonds, therefore the linkages among the polyamide 56 molecular chains are more closely, and the intermolecular force is relatively larger, and thus the mechanical properties of the prepared industrial yarn are increased.

In some embodiments of the present invention, other additive(s) may also be added during the spinning of the polyamide 56 industrial yarn, and the other additive(s) comprise any one of matting agents, flame retardants, antioxidants, ultraviolet absorbers, infrared absorbers, crystal nucleating agents, fluorescent brighteners and anti-static agents, or combination thereof; preferably, the other additive(s) are added in an amount of 0-5 wt%, based on the total weight of production raw materials.

The antioxidants include, but are not limited to, any one, two, or combination of commercially available Antioxidant 1010, Antioxidant 1098, Antioxidant 168, and sodium hypophosphite. The lubricants include, but are not limited to, commercially available P861/3.5, PTS HOB 7119, and commercially available ET132, ET141 and wax OP.

In Step (1), the polymerization of the polyamide 56 specifically comprises the following steps:

(1-1) mixing 1,5-pentane diamine, adipic acid and water uniformly under an inert gas or vacuum condition to obtain a polyamide 56 salt solution; wherein the molar ratio of 1,5-pentane diamine to adipic acid is (0.95-1.2): 1; and the inert gas comprises any one of nitrogen, argon or helium, or combination thereof;

in some embodiments of the present invention, the concentration of the polyamide 56 salt solution is between 40% and 85%;

(1-2) heating the polyamide 56 salt solution, increasing the pressure in the reaction system to 0.3-2.5 MPa, degassing, maintaining the pressure, then reducing the pressure in the reaction system to 0-0.2 MPa, and evacuating to a vacuum degree of -(0.01-0.1) MPa (gauge pressure) to obtain a polyamide 56 melt;

wherein preferably, the temperature of the reaction system at the end of the pressure-maintenance is 230-275°C; and/or

preferably, the temperature of the reaction system at the end of the pressure-reduction is 240-285°C; and/or

preferably, the temperature at the end of evacuation is 265-295°C.

In some embodiments of the present invention, in Step (1), the low-viscosity polyamide 56 resin in 96% sulfuric acid has a relative viscosity of 2.0-2.7, preferably 2.2-2.6, and more preferably 2.4-2.5.

In some embodiments of the present invention, in Step (1), the high-viscosity polyamide 56 resin in 96% sulfuric acid has a relative viscosity of 2.7-4.5, preferably 3.2-4.0, and more preferably 3.4-3.6; and/or, the high-viscosity polyamide 56 resin has an oligomer content of 0.2-1.0 wt%, and preferably 0.4-0.6 wt%; and/or, the high-viscosity polyamide 56 resin has a number average molecular weight of 18,000-40,000, and preferably 25,000-30,000, and/or has a molecular weight distribution of 0.8-1.8, and preferably 1.2-1.5; and/or

in some embodiments of the present invention, the high-viscosity polyamide 56 resin has a moisture content of 200-800 ppm, preferably 300-750 ppm, more preferably 350-700 ppm, and further more preferably 400-600 ppm; and/or, the high-viscosity polyamide 56 resin has an amino content of 20-50 mmol/kg, preferably 24-45 mmol/kg, more preferably 28-40 mmol/kg, and further more preferably 32-36 mmol/kg.

In some embodiments of the present invention, the heating in Step (1) is carried out in a screw extruder, and the screw extruder includes five heating zones; wherein the temperature of a first zone is 250-290°C, the temperature of a second zone is 260-300°C, the temperature of a third zone is 270-320°C, the temperature of a fourth zone is 280-330°C, and the temperature of a fifth zone is 280-320°C.

In some embodiments of the present invention, the spinning process in Step (2) comprises the following steps: ejecting the polyamide 56 resin through the spinneret plate of the spinning beam to form the as-spun yarn.

Preferably, the temperature of the spinning beam is 270-330°C, more preferably 280-310°C, further more preferably 290-300°C, and still further more preferably 293-297°C; and/or, the pressure of the spin pack of the spinning beam is 8-25 MPa, preferably 12-20 MPa, further more preferably 15-18 MPa; and/or, the drawing ratio of the spinneret of the spinneret plate is 50-400, preferably 70-300, further more preferably 80-200, and still further more preferably 90-100.

In some embodiments of the present invention, in Step (3), the processing process comprises the following step: thermally insulating, cooling, spin finishing, drawing, and winding into a shape the as-spun yarn which comes out of the spinneret orifices to obtain the polyamide 56 industrial yarn;

preferably, the thermal insulating is performed with a slow cooling device, the slow cooling temperature is 150-280°C, and more preferably 200-240°C, and the slow cooling length is 10-80 mm, and more preferably 20-50 mm; the cooling is performed with quench air, the air speed of the quench air is 0.3-2.0 m/s, and more preferably 0.6-1.5 m/s; the air temperature of the quench air is 15-25°C, more preferably 17-23°C, and further more preferably 19-22°C; and/or the humidity of the quench air is 60-80%, and more preferably 65-75%; and/or

the winding tension during winding the as-spun yarn into a shape is 50-300 cN, preferably 80-200 cN, further more preferably 100-160 cN, and still further more preferably 120-140 cN; or, the winding speed is 2,000-3,800 m/min, preferably 2,500-3,500 m/min, further more preferably 2,800-3,000 m/min; and/or the winding overfeed ratio is 5% or less, preferably 4% or less, and further more preferably 3% or less.

In some embodiments of the present invention, the drawing is performed in four or more stages; preferably, the drawing process comprises: firstly, feeding the as-spun yarn, which has been spin finished, to a first pair of hot rollers through a godet roller, and performing a first-stage drawing between the first pair of hot rollers and a second pair of hot rollers; preforming a second-stage drawing between the second pair of hot rollers and a third pair of hot rollers; performing a third-stage drawing and a first thermal setting between the third pair of hot rollers and a fourth pair of hot rollers; and then performing a fourth-stage drawing and a second thermal setting between the fourth pair of hot rollers and a fifth pair of hot rollers;

wherein preferably the total drawing ratio is 4.0-6.0;

the temperature of the first thermal setting is 180-250°C, and preferably 200-240°C; and/or

the temperature of the second thermal setting is 200-240°C, and preferably 220-230°C.

Advantageous effects of technical solutions according to the present invention include:
Firstly, the raw materials for producing the polyamide 5X industrial yarn of the present invention are green materials prepared by a biological process. They neither depend on petroleum resources, nor cause serious pollution to the environment. Therefore, carbon dioxide emission and greenhouse effect can be reduced.

Secondly, the polyamide 5X industrial yarn of the present invention has good heat resistance, mechanical properties and dimensional stability.

Thirdly, in the process for producing the polyamide 5X industrial yarn according to the present invention, a heat stabilizer can be added during polymerization and thus the polymerization is an in-situ polymerization. Upon sufficiently mixing, the heat stabilizer can evenly distribute in the polyamide 5X resin and does not influence spinning. Moreover, filament breaks extremely rare, and the production yield is increased.

Fourthly, the polyamide 5X industrial yarn according to the present invention can be prepared by directly using conventional devices for producing polyamide 6 and polyamide 66, without modifying those conventional spinning devices. Instead, by optimizing the quality of the polyamide 5X resin and the spinning process, the production yield can be increased, and the production costs can be reduced, which means huge benefits for spinning manufacturers.

**Mode of Carrying Out the Invention**

In order to make the objects, technical solutions and advantages of the present invention clearer, the technical solutions in the Examples of the present invention will be clearly and completely described hereinafter with reference to the Examples. Obviously, the Examples described are only a part but not all of the Examples of the present invention. All other Examples obtained by those of ordinary skill in the art based on the Examples in the present invention and without involving creative work shall fall within the protection scopes of the present invention.

Properties of the products obtained in the following Examples and Comparative Examples are measured according to the following methods:

(1) Fineness: measured according to GB/T 14343.

(2) Break Strength: measured according to GB/T 14344-2008.

(3) Elongation at Break: measured according to GB/T 14344-2008.

(4) Heat-resistant Break Strength Retention Rate: heat-resistant break strength retention rate = ((break strength before heat treatment - break strength after heat treatment) / break strength before heat treatment) * 100%. Break strength is measured according to GB/T 14344-2008. An oven is used as the heat treatment equipment. The oven temperature is 180°C, and the treatment time is 4 hrs (hours); or the oven temperature is 230°C, and the treatment time is 30 mins (minutes).

(5) Dry Heat Shrinkage: measured according to FZ/T 50004, with the heat treatment temperature being 180°C.

(6) Shrinkage in Boiling Water: measured according to GB/6505-2008 "Testing Method for Thermal Shrinkage of Man-Made Filament Yarns". Specifically, taking a section of polyamide industrial yarn, pre-applying a tension of 0.05±0.005 cN/dtex, marking two points which are 50.00 cm apart from each other, wrapping it with gauze, putting it into boiling water and boiling it for 30 mins, and then drying the sample, measuring the length between the two marked points, and using the following equation to calculate the shrinkage in boiling water:

Shrinkage in Boiling Water = ((initial length - length after shrinkage) / initial length) * 100%.

(7) Relative Viscosity: The relative viscosity of the oil-free polyamide yarn (unfinished, as-spun yarn) and that of the resin are measured with an Ubbelohde viscometer by a concentrated sulfuric acid process in the following steps: precisely weighing 0.25±0.0002 g sample of the dried polyamide resin or the staple fiber thereof, adding 50 mL concentrated sulfuric acid (96%) for dissolution, and measuring and recording the flow time to of the concentrated sulfuric acid and the flow time t of the sample solution of the polyamide 56 chip or its staple fiber in a water bath at a constant temperature of 25°C.

Relative viscosity is calculated according to the following equation:

$$\text{Relative Viscosity } VN = t/t_0;$$

t represents the flow time of the solution; and
to represents the flow time of the solvent.
(8) Moisture content: measured by a Karl Fischer moisture titrator.
(9) Crystallinity and Orientation Degree: A fiber sample is analyzed by using a D/max-2550 PC X-ray diffractometer manufactured by Rigaku Corporation, Japan under the following conditions: a Cu target wavelength $\lambda_{k\alpha1}$ = 1.54056 Å, a voltage of 20-40 kV, a current of 10-450 mA, and a measurement angle 2θ in the range of 5-40°. The polyamide 56 industrial yarn sample used for measuring the crystallinity is sufficiently shredded, and the mass of the sample is greater than 0.2 g. The polyamide 56 industrial yarn sample used for measuring the microcrystalline orientation was sufficiently combed and tested, with the bundle length being 30 mm. Softwares such as Origin are used for data processing so as to analyze and calculate the crystallinity and the orientation degree of the fibers.
The following equation is used for calculating the crystallinity:

$$x = \frac{\sum I_c}{\sum I_c + \sum I_a} \times 100\% \; ;$$

wherein $\sum I_c$ is the total diffraction integral intensity of the crystalline portions; and $\sum I_a$ is the scattering integral intensity of the amorphous portions.
The following equation is used for calculating the orientation degree:

$$y = \frac{360 - \sum H_i}{360};$$

where Hi is a half-height peak width of the $i^{th}$ peak.
(10) Production Yield:

Production Yield=((total amount of the resin charged − amount of the finished product)/total amount of the resin charged)*100%.

(11) Number Average Molecular Weight: measured by standard GPC.
(12) Molecular Weight Distribution: measured by gel permeation chromatography (GPC).
(13) Oligomer Content: measured by a Water Extraction Method (gravimetry) as follows: about 8 g of polyamide 56 resin, which has been dried at 130°C for 7 hours, is precisely weighed and placed into a 500 mL round bottom flask. 400 g of water is added. After refluxing for 36 hours in a heating mantle, the solution is decanted. The particles are dried at 130°C in a constant-weight beaker for 7 hours, and then sealed into an aluminum-plastic bag to cool down, and weighed. The weight loss is calculated. The polyamide 56 resin is prepared according to the methods disclosed in CN108503826A and CN108503824A, and has a relative viscosity of 2.7-4.5.
(14) Amino content: measuring with an automatic titrator.
(15) Filament Breakage: manually counting the times of filament breakage during spinning.

(16) Production Yield: the weight percentage of the industrial yarn obtained after spinning based on the weight of the resin charged.

In the following Examples and Comparative Examples, the absolute value of the difference between the relative viscosity of the oil-free yarn and the relative viscosity of its original resin, the absolute value of the difference between the amino content of the oil-free yarn and the amino content of its original resin, the filament breakage (times/24hr) and the production yield (%) are shown in Table 1 below. The properties of the obtained polyamide 56 industrial yarns are shown in Table 2 below.

**Example 1: Polyamide 56 Industrial Yarn (933dtex/140f)**

The process comprised the following steps:

1. Polymerization:

(1) mixing raw materials 1,5-pentane diamine, adipic acid and water uniformly under a nitrogen condition, and adding copper acetate as a heat stabilizer in an amount of 200 ppm based on the total weight of the raw materials to obtain a polyamide 56 salt solution with a concentration of 60%; wherein the molar ratio of 1,5-pentane diamine to adipic acid was 1.05:1;

(2) heating the polyamide 56 salt solution, increasing the pressure in the reaction system to 2.2 MPa, degassing, maintaining the pressure with the temperature of the reaction system at the end of the pressure-maintenance being 265°C, reducing the pressure in the reaction system to 0.1 MPa with the temperature of the reaction system at the end of the pressure reduction being 275°C, and evacuating to a vacuum degree of -0.05 MPa with the temperature at the end of evacuation being 285°C to obtain a low-viscosity polyamide 56 resin; wherein all the pressures are gauge pressures;

(3) solid phase tackifying the low-viscosity polyamide 56 resin to prepare a high-viscosity polyamide 56 resin; wherein the temperature of the solid phase tackifying was 155°C, and the drying time was 20 hours; the low-viscosity polyamide 56 resin in 96% sulfuric acid had a relative viscosity of 2.4; the high-viscosity polyamide 56 resin in 96% sulfuric acid had a relative viscosity of 3.3, an oligomer content of 0.8 wt%, a number average molecular weight of 30,000, a molecular weight distribution of 1.6, a moisture content of 400 ppm, and an amino content of 36.5 mmol/kg.

2. Spinning:

(1) heating the high-viscosity polyamide 56 resin into a molten state so as to form a polyamide 56 melt, wherein the heating was carried out in a screw extruder, and the screw extruder included five heating zones, wherein the temperature of a first zone was 255°C, the temperature of a second zone was 270°C, the temperature of a third zone was 280°C, the temperature of a fourth zone was 290°C, and the temperature of a fifth zone was 300°C; ejecting the polyamide 56 melt through the spinneret plate of the spinning beam to form an as-spun yarn; wherein the temperature of the spinning beam was 290°C, the pressure of the pack was 15 MPa, and the drawing ratio of the spinneret was 150;

(2) thermally insulating, cooling, spin finishing, drawing, and winding the as-spun yarn into a shape so as to obtain the polyamide 56 industrial yarn;

the thermal insulation was performed with a slow cooling device, the slow cooling temperature was 220°C, and the slow cooling length was 20 mm;

the cooling was performed with quench air, and the air speed was 1.2 m/s; the air temperature was 22°C; and the humidity was 70%.

The drawing was performed in four stages comprising: firstly, feeding the as-spun yarn, which had been spin finished, to a first pair of hot rollers through a godet roller; performing a first-stage drawing between the first pair of hot rollers and a second pair of hot rollers; preforming a second-stage drawing between the second pair of hot rollers and a third pair of hot rollers; performing a third-stage drawing and a first thermal setting between the third pair of hot rollers and a fourth pair of hot rollers; and then performing a fourth-stage drawing and a second thermal setting between the fourth pair of hot rollers and a fifth pair of hot rollers; wherein the total drawing ratio was 5.0; the temperature of the first thermal setting was 220°C; and the temperature of the second thermal setting was 230°C. The winding tension during winding the as-spun yarn into a shape was 90 cN; the winding speed was 3,500 m/min; and the winding overfeed ratio was 2%.

**Example 2: Polyamide 56 Industrial Yarn (830dtex/192f)**

The process comprised the following steps:

1. Polymerization:

(1) mixing raw materials 1,5-pentane diamine, adipic acid and water uniformly under a nitrogen condition, and adding copper acetate as a heat stabilizer in an amount of 500 ppm based on the total weight of the raw materials to obtain a polyamide 56 salt solution with a concentration of 60%; wherein the molar ratio of 1,5-pentane diamine to adipic acid was 1.1:1;

(2) heating the polyamide 56 salt solution, increasing the pressure in the reaction system to 2.3 MPa, degassing, maintaining the pressure with the temperature of the reaction system at the end of the pressure-maintenance being 255°C, reducing the pressure in the reaction system to 0 MPa with the temperature of the reaction system at the end of the pressure reduction being 265°C, and evacuating to a vacuum degree of -0.08 MPa with the temperature at the end of evacuation being 275°C to obtain a low-viscosity polyamide 56 resin; wherein all the pressures are gauge pressures;

(3) solid phase tackifying the low-viscosity polyamide 56 resin to prepare a high-viscosity polyamide 56 resin; wherein the temperature for the solid phase tackifying was 160°C, and the drying time was 18 hours; the low-viscosity polyamide 56 resin in 96% sulfuric acid had a relative viscosity of 2.5; the high-viscosity polyamide 56 resin in 96% sulfuric acid had a relative viscosity of 3.5, an oligomer content of 0.6 wt%, a number average molecular weight of 33,000, a molecular weight distribution of 1.5, a moisture content of 450 ppm, and an amino content of 33.5 mmol/kg.

2. Spinning:

(1) heating the high-viscosity polyamide 56 resin into a molten state so as to form a polyamide 56 melt, wherein the heating was carried out in a screw extruder, and the screw extruder included in particular five heating zones, wherein the temperature of a first zone was 265°C, the temperature of a second zone was 275°C, the temperature of a third zone was 285°C, the temperature of a fourth zone was 295°C, and the temperature of a fifth zone was 305°C; ejecting the polyamide 56 melt through the spinneret plate of the spinning beam to form an as-spun yarn; wherein the temperature of the spinning beam was 295°C, the pressure of the pack was 18 MPa and the drawing ratio of the spinneret was 180;

(2) thermally insulating, cooling, spin finishing, drawing, and winding the as-spun yarn into a shape so as to obtain the polyamide 56 industrial yarn; wherein the thermal insulation was performed with a slow cooling device, the slow cooling temperature was 230°C, and the slow cooling length was 30 mm; the cooling was performed with quench air, and the air speed was 0.8 m/s; the air temperature was 23°C; and the humidity was 75%; the winding tension during winding the as-spun yarn into a shape was 80 cN; the winding speed was 3,000 m/min; and the winding overfeed ratio was 3%. The drawing process was four-stage drawing process which was the same as that in Example 1, except that the total drawing ratio was 4.8; the temperature of the first thermal setting was 225°C; and the temperature of the second thermal setting was 240°C.

**Example 3: Polyamide 56 Industrial Yarn (550dtex/96f)**

The process comprised the following steps:

1. Polymerization:

(1) mixing raw materials 1,5-pentane diamine, adipic acid and water uniformly under a nitrogen condition, and adding cuprous iodide as a heat stabilizer in an amount of 150 ppm based on the total weight of the raw materials to obtain a polyamide 56 salt solution with a concentration of 65%; wherein the molar ratio of 1,5-pentane diamine to adipic acid was 1.1:1;

(2) heating the polyamide 56 salt solution, increasing the pressure in the reaction system to 2.3 MPa, degassing, maintaining the pressure with the temperature of the reaction system at the end of the pressure-maintenance being 240°C, reducing the pressure in the reaction system to 0.1 MPa with the temperature of the reaction system at the end of the pressure reduction being 270°C, and evacuating to a vacuum degree of -0.05 MPa with the temperature at the end of evacuation being 280°C to obtain a low-viscosity polyamide 56 resin; wherein all the pressures are gauge pressures;

(3) solid phase tackifying the low-viscosity polyamide 56 resin to prepare a high-viscosity polyamide 56 resin; wherein the temperature of the solid phase tackifying was 160°C, and the drying time was 22 hours;

the low-viscosity polyamide 56 resin in 96% sulfuric acid had a relative viscosity of 2.6; the high-viscosity polyamide 56 resin in 96% sulfuric acid had a relative viscosity of 3.0, an oligomer content of 0.8 wt%, a number average molecular weight of 30,000, a molecular weight distribution of 1.6, a moisture content of 400 ppm, and an amino content of 42.5 mmol/kg.

2. Spinning:

(1) heating the high-viscosity polyamide 56 resin into a molten state so as to form a polyamide 56 melt, wherein the heating was carried out in a screw extruder, and the screw extruder was in particular divided into five heating zones, wherein the temperature of a first zone was 248°C, the temperature of a second zone was 263°C, the temperature of a third zone was 276°C, the temperature of a fourth zone was 285°C, and the temperature of a fifth zone was 293°C; ejecting the polyamide 56 melt through the spinneret plate of the spinning beam to form the as-spun yarn; wherein the temperature of the spinning beam was 285°C, the pressure of the pack was 16 MPa and the drawing ratio of the spinneret was 100;

(2) thermally insulating, cooling, spin finishing, drawing, and winding the as-spun yarn into a shape so as to obtain the polyamide 56 industrial yarn; wherein the thermal insulation was performed with a slow cooling device, the slow cooling temperature was 220°C, and the slow cooling length was 25mm; the cooling was performed with quench air, and the air speed was 1.4m/s; the air temperature was 22°C; and the humidity was 65%; the winding tension during winding the as-spun yarn into a shape was 55 cN; the winding speed was 2,800 m/min; and the winding overfeed ratio was 2.5%. The drawing process was four-stage drawing process which was the same as that in Example 1, except that the total drawing ratio was 5.0; the temperature of the first thermal setting was 220°C; and the temperature of the second thermal setting was 235°C.

**Example 4: Polyamide 56 Industrial Yarn (550dtex/96f)**

The process comprised the following steps:

1. Polymerization:

(1) mixing raw materials 1,5-pentane diamine, adipic acid and water uniformly under a nitrogen condition, and adding cuprous iodide as a heat stabilizer in an amount of 250 ppm based on the total weight of the raw materials to obtain a polyamide 56 salt solution with a concentration of 65%; wherein the molar ratio of 1,5-pentane diamine to adipic acid was 1.12:1;

(2) heating the polyamide 56 salt solution, increasing the pressure in the reaction system to 2.4 MPa, degassing, maintaining the pressure with the temperature of the reaction system at the end of the pressure-maintenance being 245°C, reducing the pressure in the reaction system to 0.1 MPa with the temperature of the reaction system at the end of the pressure reduction being 275°C, and evacuating to a vacuum degree of -0.07 MPa with the temperature at the end of evacuation being 280°C to obtain a low-viscosity polyamide 56 resin; wherein all the pressures are gauge pressures;

(3) solid phase tackifying the low-viscosity polyamide 56 resin to prepare a high-viscosity polyamide 56 resin; wherein the temperature of the solid phase tackifying was 150°C, and the drying time was 25 hours; the low-viscosity polyamide 56 resin in 96% sulfuric acid had a relative viscosity of 2.55; the high-viscosity polyamide 56 resin in 96% sulfuric acid had a relative viscosity of 2.9, an oligomer content of 0.8 wt%, a number average molecular weight of 28,000, a molecular weight distribution of 1.5, a moisture content of 300 ppm, and an amino content of 40.5 mmol/kg.

2. Spinning:

(1) heating the high-viscosity polyamide 56 resin into a molten state so as to form a polyamide 56 melt, wherein the heating was carried out in a screw extruder, and the screw extruder was in particular divided into five heating zones, wherein the temperature of a first zone was 245°C, the temperature of a second zone was 260°C, the temperature of a third zone was 270°C, the temperature of a fourth zone was 285°C, and the temperature of a fifth zone was 290°C; ejecting the polyamide 56 melt through the spinneret plate of the spinning beam to form an as-spun yarn; wherein the temperature of the spinning beam was 280°C, the pressure of the pack was 10 MPa and the drawing ratio of the spinneret was 200;

(2) thermally insulating, cooling, spin finishing, drawing, and winding the as-spun yarn into a shape so as to obtain the polyamide 56 industrial yarn; wherein the thermal insulation was performed with a slow cooling device, the slow cooling temperature was 210°C, and the slow cooling length was 25mm; the cooling was performed with quench air, and the air speed was 1.3 m/s; the air temperature was 24°C; and the humidity was 65%; the winding tension during winding the as-spun yarn into a shape was 55 cN; the winding speed was 2,600 m/min; and the winding overfeed ratio was 2.5%. The drawing process was four-stage drawing process which was the same as that in Example 1, except that the total drawing ratio was 5.3; the temperature of the first thermal setting was 225°C; and the temperature of the second thermal setting was 235°C.

### Example 5: Polyamide 56 Industrial Yarn (233dtex/36f)

The process comprised the following steps:

1. Polymerization:

(1) mixing raw materials 1,5-pentane diamine, adipic acid and water uniformly under a nitrogen condition, and adding cuprous iodide as a heat stabilizer in an amount of 400 ppm based on the total weight of the raw materials to obtain a polyamide 56 salt solution with a concentration of 65%; wherein the molar ratio of 1,5-pentane diamine to adipic acid was 1.05:1;

(2) heating the polyamide 56 salt solution, increasing the pressure in the reaction system to 2.0 MPa, degassing, maintaining the pressure with the temperature of the reaction system at the end of the pressure-maintenance being 260°C, reducing the pressure in the reaction system to 0.1 MPa with the temperature of the reaction system at the end of the pressure reduction being 275°C, and evacuating to a vacuum degree of -0.08 MPa with the temperature at the end of evacuation being 295°C to obtain a low-viscosity polyamide 56 resin; wherein all the pressures are gauge pressures;

(3) solid phase tackifying the low-viscosity polyamide 56 resin to prepare a high-viscosity polyamide 56 resin; wherein the temperature of the solid phase tackifying was 155°C, and the drying time was 25 hours;

the low-viscosity polyamide 56 resin in 96% sulfuric acid had a relative viscosity of 2.45; the high-viscosity polyamide 56 resin in 96% sulfuric acid had a relative viscosity of 3.6, an oligomer content of 1.0 wt%, a number average molecular weight of 36,000, a molecular weight distribution of 1.7, a moisture content of 350 ppm, and an amino content of 46.5 mmol/kg.

2. Spinning:

(1) heating the high-viscosity polyamide 56 resin into a molten state so as to form a polyamide 56 melt, wherein the heating was carried out in a screw extruder, and the screw extruder was in particular divided into five heating zones, wherein the temperature of a first zone was 255°C, the temperature of a second zone was 275°C, the temperature of a third zone was 280°C, the temperature of a fourth zone was 295°C, and the temperature of a fifth zone was 310°C; ejecting the polyamide 56 melt through the spinneret plate of the spinning beam to form an as-spun yarn; wherein the temperature of the spinning beam was 295°C, the pressure of the pack was 19 MPa and the drawing ratio of the spinneret was 250;

(2) thermally insulating, cooling, spin finishing, drawing, and winding the as-spun yarn into a shape so as to obtain the polyamide 56 industrial yarn; wherein the thermal insulation was performed with a slow cooling device, the slow cooling temperature was 220°C, and the slow cooling length was 20 mm; the cooling was performed with quench air, and the air speed was 1.0 m/s; the air temperature was 18°C; and the humidity was 70%; the winding tension during winding the as-spun yarn into a shape was 23 cN; the winding speed was 2,900 m/min; and the winding overfeed ratio was 1.5%. The drawing process was four-stage drawing process which was the same as that in Example 1, except that the total drawing ratio was 5.5; the temperature of the first thermal setting was 230°C; and the temperature of the second thermal setting was 230°C.

**Example 6: Polyamide 56 Industrial Yarn (1,670dtex/192f)**

The process comprised the following steps:

1. Polymerization:

(1) mixing raw materials 1,5-pentane diamine, adipic acid and water uniformly under a nitrogen condition, and adding a heat stabilizer to obtain a polyamide 56 salt solution with a concentration of 65%; wherein the molar ratio of 1,5-pentane diamine to adipic acid was 1.1:1; the heat stabilizer was a composite of copper acetate and potassium iodide, wherein copper acetate was added in an amount of 200 ppm based on the total weight of the production raw materials, and potassium iodide was added in an amount of 500 ppm based on the total weight of the production raw materials.

(2) heating the polyamide 56 salt solution, increasing the pressure in the reaction system to 2.3 MPa, degassing, maintaining the pressure with the temperature of the reaction system at the end of the pressure-maintenance being 255°C, reducing the pressure in the reaction system to 0.1 MPa with the temperature of the reaction system at the end of the pressure reduction being 270°C, and evacuating to a vacuum degree of -0.01 MPa with the temperature at the end of evacuation being 280°C to obtain a low-viscosity polyamide 56 resin; wherein all the pressures are gauge pressures;

(3) solid phase tackifying the low-viscosity polyamide 56 resin to prepare a high-viscosity polyamide 56 resin; wherein the temperature of the solid phase tackifying was 155°C, and the drying time was 30 hours;

the low-viscosity polyamide 56 resin in 96% sulfuric acid had a relative viscosity of 2.7; the high-viscosity polyamide 56 resin in 96% sulfuric acid had a relative viscosity of 3.8, an oligomer content of 0.8 wt%, a number average molecular weight of 38,000, a molecular weight distribution of 1.5, a moisture content of 500 ppm, and an amino content of 42.5 mmol/kg.

2. Spinning:

(1) heating the high-viscosity polyamide 56 resin into a molten state so as to form a polyamide 56 melt, wherein the heating was carried out in a screw extruder, and the screw extruder was in particular divided into five heating zones, wherein the temperature of a first zone was 250°C, the temperature of a second zone was 275°C, the temperature of a third zone was 280°C, the temperature of a fourth zone was 295°C, and the temperature of a fifth zone was 305°C; ejecting the polyamide 56 melt through the spinneret plate of the spinning beam to form an as-spun yarn; wherein the temperature of the spinning beam was 290°C, the pressure of the pack was 14 MPa and the drawing ratio of the spinneret was 120;

(2) thermally insulating, cooling, spin finishing, drawing, and winding the as-spun yarn into a shape so as to obtain the polyamide 56 industrial yarn; wherein the thermal insulation was performed with a slow cooling device, the slow cooling temperature was 230°C, and the slow cooling length was 40 mm; the cooling was performed with quench air, and the air speed was 1.1 m/s; the air temperature was 23°C; and the humidity was 75%; the winding tension during winding the as-spun yarn into a shape was 160 cN; the winding speed was 3,200 m/min; and the winding overfeed ratio was 3.5%. The drawing process was four-stage drawing process which was the same as that in Example 1, except that the total drawing ratio was 5.6; the temperature of the first thermal setting was 225°C; and the temperature of the second thermal setting was 235°C.

**Example 7: Polyamide 56 Industrial Yarn (2,800dtex/480f)**

The process comprised the following steps:

1. Polymerization:

(1) mixing raw materials 1,5-pentane diamine, adipic acid and water uniformly under a nitrogen condition, and adding a heat stabilizer to obtain a polyamide 56 salt solution with a concentration of 65%; wherein the molar ratio of 1,5-pentane diamine to adipic acid was 1.05:1; the heat stabilizer was a composite of copper acetate and potassium iodide, wherein copper acetate was added in an amount of 250 ppm based on the total weight of the production raw materials, and potassium iodide was added in an amount of 2,000 ppm based on the total weight of the production raw materials.
(2) heating the polyamide 56 salt solution, increasing the pressure in the reaction system to 2.2 MPa, degassing, maintaining the pressure with the temperature of the reaction system at the end of the pressure-maintenance being 260°C, reducing the pressure in the reaction system to 0.1 MPa with the temperature of the reaction system at the end of the pressure reduction being 285°C, and evacuating to a vacuum degree of -0.03 MPa with the temperature at the end of evacuation being 290°C to obtain a low-viscosity polyamide 56 resin; wherein all the pressures are gauge pressures;
(3) solid phase tackifying the low-viscosity polyamide 56 resin to prepare a high-viscosity polyamide 56 resin; wherein the temperature of the solid phase tackifying was 155°C, and the drying time was 30 hours;
the low-viscosity polyamide 56 resin in 96% sulfuric acid had a relative viscosity of 2.35; the high-viscosity polyamide 56 resin in 96% sulfuric acid had a relative viscosity of 3.2, an oligomer content of 0.8 wt%, a number average molecular weight of 32,000, a molecular weight distribution of 1.5, a moisture content of 450 ppm, and an amino content of 38.5 mmol/kg.

2. Spinning:

(1) heating the high-viscosity polyamide 56 resin into a molten state so as to form a polyamide 56 melt, wherein the heating was carried out in a screw extruder, and the screw extruder was in particular divided into five heating zones, wherein the temperature of a first zone was 258°C, the temperature of a second zone was 276°C, the temperature of a third zone was 288°C, the temperature of a fourth zone was 298°C, and the temperature of a fifth zone was 305°C; ejecting the polyamide 56 melt through the spinneret plate of the spinning beam to form an as-spun yarn; wherein the temperature of the spinning beam was 293°C, the pressure of the pack was 12 MPa and the drawing ratio of the spinneret was 160;
(2) thermally insulating, cooling, spin finishing, drawing, and winding the as-spun yarn into a shape so as to obtain the polyamide 56 industrial yarn; wherein the thermal insulation was performed with a slow cooling device, the slow cooling temperature was 230°C, and the slow cooling length was 20 mm; the cooling was performed with quench air, and the air speed was 1.2 m/s; the air temperature was 23°C; and the humidity was 70%; the winding tension during winding the as-spun yarn into a shape was 280 cN; the winding speed was 2,700 m/min; and the winding overfeed ratio was 3%.

The drawing process was four-stage drawing process which was the same as that in Example 1, except that the total drawing ratio was 4.8; the temperature of the first thermal setting was 220°C; and the temperature of the second thermal setting was 230°C.

**Example 8: Polyamide 56 Industrial Yarn (233dtex/36f)**

The process comprised the following steps:

1. Polymerization:

(1) mixing raw materials 1,5-pentane diamine, adipic acid and water uniformly under a nitrogen condition, and adding a heat stabilizer to obtain a polyamide 56 salt solution with a concentration of 65%; wherein the molar ratio of 1,5-pentane diamine to adipic acid was 1.05:1; the heat stabilizer was a composite of copper acetate and potassium iodide, wherein copper acetate was added in an amount of 150 ppm based on the total weight of the production raw materials, and potassium iodide was added in an amount of 800 ppm based on the total weight of the production raw materials.

(2) heating the polyamide 56 salt solution, increasing the pressure in the reaction system to 2.2 MPa, degassing, maintaining the pressure with the temperature of the reaction system at the end of the pressure-maintenance being 260°C, reducing the pressure in the reaction system to 0.1 MPa with the temperature of the reaction system at the end of the pressure reduction being 285°C, and evacuating to a vacuum degree of -0.01 MPa with the temperature at the end of evacuation being 290°C to obtain a low-viscosity polyamide 56 resin; wherein all the pressures are gauge pressures;

(3) solid phase tackifying the low-viscosity polyamide 56 resin to prepare a high-viscosity polyamide 56 resin; wherein the temperature of the solid phase tackifying was 155°C, and the drying time was 30 hours;

the low-viscosity polyamide 56 resin in 96% sulfuric acid had a relative viscosity of 2.4; the high-viscosity polyamide 56 resin in 96% sulfuric acid had a relative viscosity of 3.4, an oligomer content of 0.8 wt%, a number average molecular weight of 33,000, a molecular weight distribution of 1.6, a moisture content of 550 ppm, and an amino content of 33.5 mmol/kg.

2. Spinning:

(1) heating the high-viscosity polyamide 56 resin into a molten state so as to form a polyamide 56 melt, wherein the heating was carried out in a screw extruder, and the screw extruder was in particular divided into five heating zones, wherein the temperature of a first zone was 268°C, the temperature of a second zone was 280°C, the temperature of a third zone was 290°C, the temperature of a fourth zone was 295°C, and the temperature of a fifth zone was 303°C; ejecting the polyamide 56 melt through the spinneret plate of the spinning beam to form an as-spun yarn; wherein the temperature of the spinning beam was 298°C, the pressure of the pack was 18 MPa and the drawing ratio of the spinneret was 120;

(2) thermally insulating, cooling, spin finishing, drawing, and winding the as-spun yarn into a shape so as to obtain the polyamide 56 industrial yarn; wherein the thermal insulation was performed with a slow cooling device, the slow cooling temperature was 220°C, and the slow cooling length was 30 mm; the cooling was performed with quench air, and the air speed was 1.2 m/s; the air temperature was 23°C; and the humidity was 70%; the winding tension during winding the as-spun yarn into a shape was 140 cN; the winding speed was 3,000 m/min; and the winding overfeed ratio was 2%.

The drawing process was four-stage drawing process which was the same as that in Example 1, except that the total drawing ratio was 4.8; the temperature of the first thermal setting was 220°C; and the temperature of the second thermal setting was 230°C.

**Example 9: Polyamide 56 Industrial Yarn (933dtex/140f)**

The process comprised the following steps:

1. Polymerization:

(1) mixing raw materials 1,5-pentane diamine, adipic acid and water uniformly under a nitrogen condition, and adding copper chloride as a heat stabilizer in an amount of 300 ppm based on the total weight of the raw materials to obtain a polyamide 56 salt solution with a concentration of 65%; wherein the molar ratio of 1,5-pentane diamine to adipic acid was 1.1:1;

(2) heating the polyamide 56 salt solution, increasing the pressure in the reaction system to 2.25 MPa, degassing, maintaining the pressure with the temperature of the reaction system at the end of the pressure-maintenance being 260°C, reducing the pressure in the reaction system to 0.1 MPa with the temperature of the reaction system at the end of the pressure reduction being 275°C, and evacuating to a vacuum degree of -0.01 MPa with the temperature at the end of evacuation being 280°C to obtain a low-viscosity polyamide 56 resin; wherein all the pressures are gauge pressures;

(3) solid phase tackifying the low-viscosity polyamide 56 resin to prepare a high-viscosity polyamide 56 resin; wherein the temperature of the solid phase tackifying was 160°C, and the drying time was 22 hours;

the low-viscosity polyamide 56 resin in 96% sulfuric acid had a relative viscosity of 2.4; the high-viscosity polyamide 56 resin in 96% sulfuric acid had a relative viscosity of 3.4, an oligomer content of 0.8 wt%, a number average molecular weight of 33,000, a molecular weight distribution of 1.6, a moisture content of 550 ppm, and an amino content of 33.5 mmol/kg.

2. Spinning:

(1) heating the high-viscosity polyamide 56 resin into a molten state so as to form a polyamide 56 melt, wherein the heating was carried out in a screw extruder, and the screw extruder was in particular divided into five heating zones, wherein the temperature of a first zone was 268°C, the temperature of a second zone was 280°C, the temperature of a third zone was 290°C, the temperature of a fourth zone was 295°C, and the temperature of a fifth zone was 303°C; ejecting the polyamide 56 melt through the spinneret plate of the spinning beam to form an as-spun yarn; wherein the temperature of the spinning beam was 280°C, the pressure of the pack was 13 MPa and the drawing ratio of the spinneret was 150;

(2) thermally insulating, cooling, spin finishing, drawing, and winding the as-spun yarn into a shape so as to obtain the polyamide 56 industrial yarn; wherein the thermal insulation was performed with a slow cooling device, the slow cooling temperature was 200°C, and the slow cooling length was 40 mm; the cooling was performed with quench air, and the air speed was 1.3 m/s; the air temperature was 20°C; and the humidity was 70%; the winding tension during winding the as-spun yarn into a shape was 90 cN; the winding speed was 2,700 m/min; and the winding overfeed ratio was 2.5%.

The drawing process was four-stage drawing process which was the same as that in Example 1, except that the total drawing ratio was 4.8; the temperature of the first thermal setting was 210°C; and the temperature of the second thermal setting was 220°C.

**Example 10: Polyamide 56 Industrial Yarn (933dtex/140f)**

The process comprised the following steps:

1. Polymerization:

(1) mixing raw materials 1,5-pentane diamine, adipic acid and water uniformly under a nitrogen condition to obtain a polyamide 56 salt solution with a concentration of 65%; wherein the molar ratio of 1,5-pentane diamine to adipic acid was 1.15:1;

(2) heating the polyamide 56 salt solution, increasing the pressure in the reaction system to 2.3 MPa, degassing, maintaining the pressure with the temperature of the reaction system at the end of the pressure-maintenance being 265°C, reducing the pressure in the reaction system to 0 MPa with the temperature of the reaction system at the end of the pressure reduction being 275°C, and evacuating to a vacuum degree of -0.04 MPa with the temperature at the end of evacuation being 285°C to obtain a low-viscosity polyamide 56 resin; wherein all the pressures are gauge pressures;

the heat stabilizer masterbatch was injected online before the polymer melt was pelletized, the copper ion content in the heat stabilizer masterbatch was 2.0 wt %, and the addition amount of the heat stabilizer masterbatch was 1.5 wt %; the heat stabilizer masterbatch base material was polyamide 56; the process for producing the heat stabilizer masterbatch comprised the following steps: (a) drying the base material polyamide 56 in vacuum, and then grinding it into powders; the polyamide 56 was 65 parts by weight, the relative viscosity thereof was 2.9, the number average molecular weight thereof was 24 kg /mol, the molecular weight distribution thereof was 2.1, and the moisture content thereof was 500 ppm; (b) mixing the powders obtained in Step (a) with 12.5 parts by weight of heat stabilizer cuprous iodide, 0.5 parts by weight of lubricant Wax OP, 0.2 parts by weight of Antioxidant 168, melting, extruding and pelletizing the mixture with a twin-screw to obtain a heat stabilizer masterbatch, wherein the processing temperature of each zone was set as follows: the temperature of a first zone was 251°C, the temperature of a second zone was 264°C, the temperature of a third zone was 269°C, the temperature of a fourth zone was 273°C, and the temperature of a fifth zone was 276°C; the screw rotation speed was 250 r/min, and the filter screen was 150 mesh.

(3) solid phase tackifying the low-viscosity polyamide 56 resin to prepare a high-viscosity polyamide 56 resin; wherein the temperature of the solid phase tackifying was 155°C, and the drying time was 25 hours;

the low-viscosity polyamide 56 resin in 96% sulfuric acid had a relative viscosity of 2.5; the high-viscosity polyamide 56 resin in 96% sulfuric acid had a relative viscosity of 3.7, an oligomer content of 0.6 wt%, a number average molecular weight of 34,000, a molecular weight distribution of 1.5, a moisture content of 300 ppm, and an amino content of 33.8 mmol/kg.

2. Spinning:

(1) heating the high-viscosity polyamide 56 resin into a molten state so as to form a polyamide 56 melt, wherein the heating was carried out in a screw extruder, and the screw extruder was in particular divided into five heating zones, wherein the temperature of a first zone was 265°C, the temperature of a second zone was 278°C, the temperature of a third zone was 288°C, the temperature of a fourth zone was 295°C, and the temperature of a fifth zone was 300°C; ejecting the polyamide 56 melt through the spinneret plate of the spinning beam to form an as-spun yarn; wherein the temperature of the spinning beam was 295°C, the pressure of the pack was 14 MPa and the drawing ratio of the spinneret was 80;

(2) thermally insulating, cooling, spin finishing, drawing, and winding the as-spun yarn into a shape so as to obtain the polyamide 56 industrial yarn; wherein the thermal insulation was performed with a slow cooling device, the slow cooling temperature was 230°C, and the slow cooling length was 25 mm; the cooling was performed with quench air, and the air speed was 1.1 m/s; the air temperature was 22°C; and the humidity was 70%;

the winding tension during winding the as-spun yarn into a shape was 90 cN; the winding speed was 2,600 m/min; and the winding overfeed ratio was 2%.

the drawing process was four-stage drawing process which was the same as that in Example 1, except that the total drawing ratio was 5.0; the temperature of the first thermal setting was 220°C; and the temperature of the second thermal setting was 230°C.

**Example 11: Polyamide 56 Industrial Yarn (933dtex/140f)**

The process comprised the following steps:

1. Polymerization:

(1) mixing raw materials 1,5-pentane diamine, adipic acid and water uniformly under a nitrogen condition to obtain a polyamide 56 salt solution with a concentration of 65%; wherein the molar ratio of 1,5-pentane diamine to adipic acid was 1.06:1;

(2) heating the polyamide 56 salt solution, increasing the pressure in the reaction system to 2.2 MPa, degassing, maintaining the pressure with the temperature of the reaction system at the end of the pressure-maintenance being 265°C, reducing the pressure in the reaction system to 0.1 MPa with the temperature of the reaction system at the end of the pressure reduction being 275°C, and evacuating to a vacuum degree of -0.06 MPa with the temperature at the end of evacuation being 285°C to obtain a low-viscosity polyamide 56 resin; wherein all the pressures are gauge pressures;

(3) solid phase tackifying the low-viscosity polyamide 56 resin to prepare a high-viscosity polyamide 56 resin; wherein the temperature of the solid phase tackifying was 160°C, and the drying time was 28 hours; the low-viscosity polyamide 56 resin in 96% sulfuric acid had a relative viscosity of 2.4; the high-viscosity polyamide 56 resin in 96% sulfuric acid had a relative viscosity of 3.3, an oligomer content of 0.9 wt%, a number average molecular weight of 32,000, a molecular weight distribution of 1.6, a moisture content of 450 ppm, and an amino content of 36.5 mmol/kg.

2. Spinning:

(1) heating the high-viscosity polyamide 56 resin into a molten state so as to form a polyamide 56 melt, wherein the heating was carried out in a screw extruder, and the screw extruder was in particular divided into five heating zones, wherein the temperature of a first zone was 255°C, the temperature of a second zone was 275°C, the temperature of a third zone was 280°C, the temperature of a fourth zone was 290°C, and the temperature of a fifth zone was 305°C; ejecting the polyamide 56 melt through the spinneret plate of the spinning beam to form an as-spun yarn; wherein the temperature of the spinning beam was 295°C, the pressure of the pack was 14 MPa and the drawing ratio of the spinneret was 140;

a heat stabilizer masterbatch was blended with a masterbatch addition device during the spinning, the content of copper ions in the heat stabilizer masterbatch was 1.8 wt %; the heat stabilizer masterbatch was added in an amount of 1.2 wt%; and the process for producing the heat stabilizer masterbatch was the same as that in Example 10.

(2) thermally insulating, cooling, spin finishing, drawing, and winding the as-spun yarn into a shape so as to obtain the polyamide 56 industrial yarn; wherein the thermal insulation was performed with a slow cooling device, the slow cooling temperature was 240°C, and the slow cooling length was 20 mm; the cooling was performed with quench air, and the air speed was 1.4m/s; the air temperature was 22°C; and the humidity was 70%;

the winding tension during winding the as-spun yarn into a shape was 90 cN; the winding speed was 3,500 m/min; and the winding overfeed ratio was 2%.

The drawing process was four-stage drawing process which was the same as that in Example 1, except that the total drawing ratio was 5.0; the temperature of the first thermal setting was 220°C; and the temperature of the second thermal setting was 230°C.

**Example 12: Polyamide 56 Industrial Yarn (933dtex/140f)**

The process comprised the following steps:

1. Polymerization:

(1) mixing raw materials 1,5-pentane diamine, adipic acid and water uniformly under a nitrogen condition to obtain a polyamide 56 salt solution with a concentration of 65%; wherein the molar ratio of 1,5-pentane diamine to adipic acid was 1.08:1;

(2) heating the polyamide 56 salt solution, increasing the pressure in the reaction system to 2.2 MPa, degassing, maintaining the pressure with the temperature of the reaction system at the end of the pressure-maintenance being 265°C, reducing the pressure in the reaction system to 0 MPa with the temperature of the reaction system at the end of the pressure reduction being 275°C, and evacuating to a vacuum degree of -0.05 MPa with the temperature at the end of evacuation being 290°C to obtain a low-viscosity polyamide 56 resin; wherein all the pressures are gauge pressures;

(3) solid phase tackifying the low-viscosity polyamide 56 resin to prepare a high-viscosity polyamide 56 resin; wherein the temperature of the solid phase tackifying was 160°C, and the drying time was 28 hours; the low-viscosity polyamide 56 resin in 96% sulfuric acid had a relative viscosity of 2.4; the high-viscosity polyamide 56 resin in 96% sulfuric acid had a relative viscosity of 3.2, an oligomer content of 0.8 wt%, a number average molecular weight of 30,000, a molecular weight distribution of 1.6, a moisture content of 400 ppm, and an amino content of 32.3 mmol/kg.

2. Spinning:

(1) heating the high-viscosity polyamide 56 resin into a molten state so as to form a polyamide 56 melt, wherein the heating was carried out in a screw extruder, and the screw extruder was in particular divided into five heating zones, wherein the temperature of a first zone was 250°C, the temperature of a second zone was 270°C, the temperature of a third zone was 285°C, the temperature of a fourth zone was 290°C, and the temperature of a fifth zone was 290°C; ejecting the polyamide 56 melt through the spinneret plate of the spinning beam to form an as-spun yarn;

wherein the temperature of the spinning beam was 285°C, the pressure of the pack was 12 MPa and the drawing ratio of the spinneret was 180;

a heat stabilizer masterbatch was blended with a masterbatch addition device during the spinning, the content of copper ions in the heat stabilizer masterbatch was 1.6 wt %, and the heat stabilizer masterbatch was added in an amount of 1.5 wt%;

the heat stabilizer masterbatch base material was polyamide 6; the process for producing the heat stabilizer masterbatch comprised the following steps: (a) drying the base material polyamide 6 in vacuum, and then grinding it into powders; the polyamide 6 was 65 parts by weight, the relative viscosity thereof was 2.9, the number average molecular weight thereof was 24 kg /mol, the molecular weight distribution thereof was 2.1, and the moisture content thereof was 500 ppm; (b) mixing the powders obtained in Step (a) with 15 parts by weight of heat stabilizer cuprous iodide, 0.5 parts by weight of lubricant Wax OP, 0.2 parts by weight of Antioxidant 168, melting, extruding and pelletizing the mixture with a twin-screw to obtain a heat stabilizer masterbatch, wherein the processing temperature of each zone was set as follows: the temperature of a first zone was 200°C, the temperature of a second zone was 210°C, the temperature of a third zone was 220°C, the temperature of a fourth zone was 230°C, and the temperature of a fifth zone was 235°C, the screw rotation speed was 250 r/min, and the filter screen was 150 mesh.

(2) thermally insulating, cooling, spin finishing, drawing, and winding the as-spun yarn into a shape so as to obtain the polyamide 56 industrial yarn; wherein the thermal insulation was performed with a slow cooling device, the slow cooling temperature was 225°C, and the slow cooling length was 20 mm; the cooling was performed with quench air, and the air speed was 1.2 m/s; the air temperature was 22°C; and the humidity was 70%;

the winding tension during winding the as-spun yarn into a shape was 90 cN; the winding speed was 3,300 m/min; and the winding overfeed ratio was 2%.

The drawing process was four-stage drawing process which was the same as that in Example 1, except that the total drawing ratio was 5.0; the temperature of the first thermal setting was 220°C; and the temperature of the second thermal setting was 230°C.

**Example 13: Polyamide 56 Industrial Yarn (933dtex/140f)**

The process comprised the following steps:

1. Polymerization:

(1) mixing raw materials 1,5-pentane diamine, adipic acid and water uniformly under a nitrogen condition, and adding cuprous iodide as a heat stabilizer in an amount of 200 ppm based on the total weight of the raw materials to obtain a polyamide 56 salt solution with a concentration of 65%; wherein the molar ratio of 1,5-pentane diamine to adipic acid was 1.1:1;

(2) heating the polyamide 56 salt solution, increasing the pressure in the reaction system to 2.25 MPa, degassing, maintaining the pressure with the temperature of the reaction system at the end of the pressure-maintenance being 265°C, reducing the pressure in the reaction system to 0.1 MPa with the temperature of the reaction system at the end of the pressure reduction being 280°C, and evacuating to a vacuum degree of -0.01 MPa with the temperature at the end of evacuation being 295°C to directly obtain a high-viscosity polyamide 56 resin; wherein all the pressures are gauge pressures;

the high-viscosity polyamide 56 melt in 96% sulfuric acid had a relative viscosity of 3.4, an oligomer content of 0.8 wt%, a number average molecular weight of 30,000, a molecular weight distribution of 1.6, a moisture content of 400 ppm, and an amino content of 32.5 mmol/kg.

2. Spinning:

(1) conveying the high-viscosity polyamide 56 melt to a spinning beam by a melt booster pump, and spinning directly; ejecting the polyamide 56 melt through the spinneret plate of the spinning beam to form an as-spun yarn; wherein the temperature of the spinning beam was 280°C, the pressure of the pack was 18 MPa and the drawing ratio of the spinneret was 200;

(2) thermally insulating, cooling, spin finishing, drawing, and winding the as-spun yarn into a shape so as to obtain the polyamide 56 industrial yarn; wherein the thermal insulation was performed with a slow cooling device, the slow cooling temperature was 220°C, and the slow cooling length was 20 mm; the cooling was performed with quench air, and the air speed was 1.2 m/s; the air temperature was 22°C; and the humidity was 70%;

the winding tension during winding the as-spun yarn into a shape was 90 cN; the winding speed was 2,500 m/min; and the winding overfeed ratio was 2%.

The drawing process was four-stage drawing process which was the same as that in Example 1, except that the total drawing ratio was 5.0; the temperature of the first thermal setting was 220°C; and the temperature of the second thermal setting was 230°C.

**Example 14: Polyamide 56 Industrial Yarn (2,800dtex/480f)**

The process comprised the following steps:

1. Polymerization:

(1) mixing raw materials 1,5-pentane diamine, adipic acid and water uniformly under a nitrogen condition, and adding a heat stabilizer to obtain a polyamide 56 salt solution with a concentration of 65%; wherein the molar ratio of 1,5-pentane diamine to adipic acid was 1.08:1; the heat stabilizer was a composite of copper acetate and potassium iodide, wherein copper acetate was added in an amount of 200 ppm based on the total weight of the production raw materials, and potassium iodide was added in an amount of 700 ppm based on the total weight of the production raw materials.

(2) heating the polyamide 56 salt solution, increasing the pressure in the reaction system to 2.4 MPa, degassing, maintaining the pressure with the temperature of the reaction system at the end of the pressure-maintenance being 265°C, reducing the pressure in the reaction system to 0.1 MPa with the temperature of the reaction system at the end of the pressure reduction being 285°C, and evacuating to a vacuum degree of -0.06 MPa with the temperature at the end of evacuation being 290°C to directly obtain a high-viscosity polyamide 56 melt; wherein all the pressures are gauge pressures;

the high-viscosity polyamide 56 melt in 96% sulfuric acid had a relative viscosity of 3.5, an oligomer content of 1.0 wt%, a number average molecular weight of 34,000, a molecular weight distribution of 1.6, a moisture content of 450 ppm, and an amino content of 40.5 mmol/kg.

2. Spinning:

(1) conveying the high-viscosity polyamide 56 melt to a spinning beam by a melt booster pump, and spinning directly; ejecting the polyamide 56 melt through the spinneret plate of the spinning beam to form an as-spun yarn; wherein the temperature of the spinning beam was 290°C, the pressure of the pack was 12 MPa and the drawing ratio of the spinneret was 180;

(2) thermally insulating, cooling, spin finishing, drawing, and winding the as-spun yarn into a shape so as to obtain the polyamide 56 industrial yarn; wherein the thermal insulation was performed with a slow cooling device, the slow cooling temperature was 210°C, and the slow cooling length was 20 mm; the cooling was performed with quench air, and the air speed was 1.2 m/s; the air temperature was 23°C; and the humidity was 70%;

the winding tension during winding the as-spun yarn into a shape was 280 cN; the winding speed was 2,900 m/min; and the winding overfeed ratio was 3%.

The drawing process was four-stage drawing process which was the same as that in Example 1, except that the total drawing ratio was 4.5; the temperature of the first thermal setting was 220°C; and the temperature of the second thermal setting was 230°C.

**Example 15: Polyamide 56 Industrial Yarn (1,670dtex/192f)**

The preparation process was the same as that in Example 6, except that the heat stabilizer was a composite of copper acetate and potassium iodide, wherein copper acetate was added in an amount of 200 ppm based on the total weight of the production raw materials, and potassium iodide was added in an amount of 1,000 ppm based on the total weight of the production raw materials.

**Example 16: Polyamide 56 Industrial Yarn (1,670dtex/192f)**

The preparation process was the same as that in Example 6, except that the heat stabilizer was a composite of copper acetate and potassium iodide, wherein copper acetate was added in an amount of 200 ppm based on the total weight of the production raw materials, and potassium iodide was added in an amount of 2,000 ppm based on the total weight of the production raw materials.

**Example 17: Polyamide 56 Industrial Yarn (1,670dtex/192f)**

The preparation process was the same as that in Example 6, except that the heat stabilizer was a composite of copper acetate and potassium iodide, wherein copper acetate was added in an amount of 200 ppm based on the total weight of the production raw materials, and potassium iodide was added in an amount of 1,800 ppm based on the total weight of the production raw materials.

**Example 18: Polyamide 56 Industrial Yarn (1,670dtex/192f)**

The preparation process was the same as that in Example 6, except that the heat stabilizer was a composite of copper acetate and potassium iodide, wherein copper acetate was added in an amount of 200 ppm based on the total weight of the production raw materials, and potassium iodide was added in an amount of 2,500 ppm based on the total weight of the production raw materials.

**Comparative Example 1: Polyamide 56 Industrial Yarn (933dtex/140f)**

The preparation method was the same as that in Example 1, except that heat stabilizer copper acetate was not added during the polymerization of 1,5-pentane diamine and adipic acid in Step (1).

**Comparative Example 2: Polyamide 56 Industrial Yarn (933dtex/140f)**

The preparation method was the same as that in Example 1, except that the obtained high-viscosity polyamide 56 resin has a moisture content of 1,200 ppm in the polymerization in Step 1.

**Comparative Example 3: Polyamide 56 Industrial Yarn (1,670dtex/192f)**

The process comprised the following steps:

1. Polymerization:

(1) mixing raw materials 1,5-pentane diamine, adipic acid and water uniformly under a nitrogen condition, and adding a heat stabilizer to obtain a polyamide 56 salt solution with a concentration of 60%; wherein the molar ratio of 1,5-pentane diamine to adipic acid was 1.1:1; the heat stabilizer was a composite of copper acetate and potassium iodide, wherein copper acetate was added in an amount of 200 ppm based on the total weight of the production raw materials, and potassium iodide was added in an amount of 500 ppm based on the total weight of the production raw materials;
(2) heating the polyamide 56 salt solution, increasing the pressure in the reaction system to 2.3 MPa, degassing, maintaining the pressure with the temperature of the reaction system at the end of the pressure-maintenance being 255°C, reducing the pressure in the reaction system to 0.1 MPa with the temperature of the reaction system at the end of the pressure reduction being 270°C, and evacuating to a vacuum degree of -0.05 MPa with the temperature at the end of evacuation being 280°C to obtain a low-viscosity polyamide 56 resin; wherein all the pressures are gauge pressures;

the low-viscosity polyamide 56 resin in 96% sulfuric acid had a relative viscosity of 2.5, an oligomer content of 0.8 wt%, a number average molecular weight of 16,000, a molecular weight distribution of 1.5, a moisture content of 500 ppm, and an amino content of 42.5 mmol/kg.

2. Spinning:

(1) heating the low-viscosity polyamide 56 resin to a molten state to form a polyamide 56 melt, wherein the heating was carried out in a screw extruder, and the screw extruder was in particular divided into five heating zones, wherein the temperature of a first zone was 250°C, the temperature of a second zone was 275°C, the temperature of a third zone was 280°C, the temperature of a fourth zone was 295°C, and the temperature of a fifth zone was 305°C; ejecting the polyamide 56 melt through the spinneret plate of the spinning beam to form an as-spun yarn; wherein the temperature of the spinning beam was 290°C, the pressure of the pack was 14 MPa and the drawing ratio of spinneret was 120;

(2) thermally insulating, cooling, spin finishing, drawing, and winding the as-spun yarn into a shape so as to obtain the polyamide 56 industrial yarn;

wherein the thermal insulation was performed with a slow cooling device, the slow cooling temperature was 230°C, and the slow cooling length was 40 mm; the cooling was performed with quench air, and the air speed was 1.1 m/s; the air temperature was 23°C; and the humidity was 75%; the winding tension during winding the as-spun yarn into a shape was 160 cN; the winding speed was 3,200 m/min; and the winding overfeed ratio was 3.5%; the drawing process was four-stage drawing process which was the same as that in Example 1, except that the total drawing ratio was 5.6; the temperature of the first thermal setting was 225°C; and the temperature of the second thermal setting was 235°C.

**Comparative Example 4: Polyamide 6 Industrial Yarn (933dtex/140f)**

The process comprised the following steps:

(1) heating the high-viscosity polyamide 6 resin into a molten state to form a polyamide 6 melt, wherein the heating was carried out in a screw extruder, and the screw extruder included in particular five heating zones, wherein the temperature of a first zone was 255°C, the temperature of a second zone was 270°C, the temperature of a third zone was 280°C, the temperature of a fourth zone was 290°C, and the temperature of a fifth zone was 300°C; the high-viscosity polyamide 6 resin in 96% sulfuric acid had a relative viscosity of 3.3, an oligomer content of 0.8 wt%, a number average molecular weight of 30,000, a molecular weight distribution of 1.6, a moisture content of 400 ppm, and an amino content of 36.5 mmol/kg.

2. Spinning the polyamide 6 melt into yarns, ejecting the polyamide 6 melt through the spinneret plate of the spinning beam to form an as-spun yarn; wherein the temperature of the spinning beam was 290°C, the pressure of the pack was 15 MPa and the drawing ratio of spinneret was 150;

3. processing the as-spun yarn to obtain the polyamide 6 industrial yarn, wherein the processing comprised the steps of thermally insulating, cooling, spin finishing, drawing, and winding the as-spun yarn into a shape so as to obtain the polyamide 56 industrial yarn; wherein the thermal insulation was performed with a slow cooling device, the slow cooling temperature was 220°C, and the slow cooling length was 20 mm; the cooling was performed with quench air, and the air speed was 1.2 m/s; the air temperature was 22°C; and the humidity was 70%;

the winding tension during winding the as-spun yarn into a shape was 90 cN; the winding speed was 3,500 m/min; and the winding overfeed ratio was 2.0%.

The drawing process was four-stage drawing process which was the same as that in Example 1, except that the total drawing ratio was 5.0; the temperature of the first thermal setting was 220°C; and the temperature of the second thermal setting was 230°C.

In the above Examples and Comparative Examples, the absolute value of the difference between the relative viscosity of the oil-free yarn and the relative viscosity of its original resin, the absolute value of the difference between the amino content of the oil-free yarn and the amino content of its original resin, the filament breakage (times/24hrs) and the production yield (%) are shown in Table 1 below. The properties of the obtained polyamide 56 industrial yarn are shown in Table 2 below.

**Table 1**

| No. | Relative viscosity of the original resin | Relative viscosity of the oil-free yarn | Absolute value of the difference between the relative viscosity of the oil-free yarn and the relative viscosity of its original resin | Amino content of the original resin (mmol/ kg) | Amino content of the oil-free yarn (mmol/kg) | Absolute value of the difference between the amino content of the oil-free yarn and the amino content of its original resin | Filament breakage (times/ 24hrs) | Production yield (%) |
|---|---|---|---|---|---|---|---|---|
| Example 1 | 3.31 | 3.40 | 0.09 | 36.5 | 35.2 | 1.3 | 1 | 97.8 |
| Example 2 | 3.52 | 3.57 | 0.05 | 33.5 | 33.0 | 0.5 | 1 | 96.7 |
| Example 3 | 3.00 | 3.06 | 0.06 | 42.5 | 41.0 | 1.5 | 0 | 96.0 |
| Example4 | 2.90 | 3.00 | 0.10 | 40.5 | 39.2 | 1.3 | 0 | 95.2 |
| Example 5 | 3.60 | 3.63 | 0.03 | 46.5 | 45.3 | 1.2 | 1 | 96.3 |
| Example 6 | 3.41 | 3.46 | 0.05 | 43.2 | 42.5 | 0.7 | 0 | 97.0 |
| Example 7 | 3.21 | 3.20 | 0.01 | 38.5 | 39.0 | 0.5 | 0 | 98.5 |
| Example 8 | 3.41 | 3.49 | 0.08 | 33.5 | 33.0 | 0.5 | 0 | 96.7 |
| Example 9 | 3.61 | 3.66 | 0.05 | 34.5 | 32.0 | 2.5 | 1 | 96.3 |
| Example 10 | 3.70 | 3.80 | 0.10 | 33.8 | 32.6 | 1.2 | 1 | 96.4 |
| Example 11 | 3.29 | 3.37 | 0.08 | 36.5 | 35.0 | 1.5 | 1 | 95.8 |
| Example 12 | 3.22 | 3.19 | 0.03 | 32.3 | 34.0 | 1.7 | 1 | 95.0 |
| Example 13 | 3.39 | 3.46 | 0.07 | 32.5 | 30.7 | 1.8 | 0 | 97.2 |
| Example 14 | 3.50 | 3.48 | 0.02 | 40.5 | 41.8 | 1.3 | 0 | 98.3 |
| Example 15 | 3.38 | 3.40 | 0.02 | 42.5 | 41.2 | 1.3 | 0 | 97.0 |
| Example 16 | 3.41 | 3.46 | 0.05 | 42.0 | 40.8 | 1.2 | 0 | 96.5 |
| Example 17 | 3.42 | 3.50 | 0.08 | 42.5 | 41.4 | 1.1 | 0 | 98.5 |
| Example 18 | 3.40 | 3.44 | 0.04 | 42.3 | 40.8 | 1.5 | 0 | 97.5 |
| Comparative Example 1 | 3.32 | 3.17 | 0.15 | 36.5 | 42.0 | 5.5 | 4 | 90.8 |
| Comparative Example 2 | 3.31 | 2.90 | 0.41 | 36.5 | 43.4 | 6.9 | 12 | 80.5 |

(continued)

| No. | Relative viscosity of the original resin | Relative viscosity of the oil-free yarn | Absolute value of the difference between the relative viscosity of the oil-free yarn and the relative viscosity of its original resin | Amino content of the original resin (mmol/kg) | Amino content of the oil-free yarn (mmol/kg) | Absolute value of the difference between the amino content of the oil-free yarn and the amino content of its original resin | Filament breakage (times/24hrs) | Production yield (%) |
|---|---|---|---|---|---|---|---|---|
| Comparative Example 3 | 2.50 | 2.37 | 0.13 | 42.5 | 47.8 | 5.3 | 15 | 83.4 |
| Comparative Example 4 | 3.30 | 3.28 | 0.02 | 36.5 | 39.0 | 2.5 | 3 | 93.0 |

In the present invention, by reducing the viscosity of the oil-free yarn and the fluctuation range of the amino content, uniformity and stability of the polyamide 56 melt were increased, the filament breakage was reduced, and the spinnability were increased. The prepared polyamide 56 industrial yarn achieved a high yield of 95% or more, and had a filament breakage of 1 time or less every 24 hrs.

**Table 2**

| No. | 180°C * 4 hrs; Heat Resistant Break Strength Retention Rate (%) | 230°C * 30 mins; Heat Resistant Break Strength Retention Rate (%) | Dry Heat Shrinkage (%) | Break Strength (cN/dtex) | elongation at break (%) | Shrinkage in Boiling Water (%) | Crystallinity (%) | Orientation Degree (%) |
|---|---|---|---|---|---|---|---|---|
| Example 1 | 92.2 | 91.6 | 5.2 | 8.5 | 23.9 | 5.8 | 72.6 | 82.5 |
| Example 2 | 95.3 | 93.8 | 4.8 | 8.6 | 22.2 | 5.5 | 74.3 | 84.4 |
| Example 3 | 92.8 | 91.6 | 5.3 | 8.6 | 20.8 | 5.2 | 74.7 | 84.5 |
| Example 4 | 93.8 | 92.4 | 5.1 | 8.7 | 19.8 | 5.0 | 75.0 | 85.0 |
| Example 5 | 96.2 | 95.7 | 4.6 | 8.8 | 17.5 | 4.8 | 76.4 | 86.2 |
| Example 6 | 94.5 | 94.5 | 4.5 | 8.6 | 20.2 | 4.6 | 75.3 | 87.8 |
| Example 7 | 96.9 | 95.5 | 4.2 | 8.8 | 21.5 | 4.3 | 76.8 | 88.2 |
| Example 8 | 93.8 | 92.0 | 4.2 | 8.5 | 18.0 | 4.8 | 74.5 | 86.9 |
| Example 9 | 91.5 | 90.8 | 5.3 | 8.6 | 22.8 | 4.7 | 73.9 | 85.3 |
| Example 10 | 92.6 | 92.0 | 4.9 | 8.6 | 20.5 | 5.0 | 73.4 | 82.3 |
| Example 11 | 93.8 | 93.5 | 5.2 | 8.5 | 19.8 | 5.5 | 74.3 | 84.8 |
| Example 12 | 92.4 | 92.2 | 5.3 | 8.4 | 18.4 | 5.6 | 72.4 | 83.1 |
| Example 13 | 94.2 | 93.8 | 4.7 | 8.7 | 21.2 | 4.9 | 76.0 | 82.6 |
| Example 14 | 95.4 | 94.6 | 5.0 | 8.5 | 22.3 | 5.2 | 75.2 | 84.5 |
| Example 15 | 94.7 | 93.9 | 4.6 | 8.6 | 21.0 | 4.5 | 74.9 | 87.5 |
| Example 16 | 95.1 | 94.8 | 4.4 | 8.6 | 19.3 | 4.4 | 75.1 | 87.3 |
| Example 17 | 94.5 | 93.1 | 4.7 | 8.5 | 22.2 | 4.8 | 74.9 | 83.5 |
| Example 18 | 92.9 | 91.3 | 4.7 | 8.6 | 19.0 | 4.5 | 71.3 | 81.7 |
| Comparative Example 1 | 70.5 | 68.5 | 8.0 | 7.6 | 20.0 | 8.2 | 68.5 | 72.5 |
| Comparative Example 2 | 85.6 | 82.9 | 7.0 | 6.3 | 22.6 | 8.1 | 63.2 | 70.7 |
| Comparative Example 3 | 82.2 | 80.7 | 7.5 | 6.0 | 23.5 | 8.5 | 65.8 | 72.5 |

(continued)

| No. | 180°C * 4 hrs; Heat Resistant Break Strength Retention Rate (%) | 230°C * 30 mins; Heat Resistant Break Strength Retention Rate (%) | Dry Heat Shrinkage (%) | Break Strength (cN/ dtex) | elongation at break (%) | Shrinkage in Boiling Water (%) | Crystallinity (%) | Orientation Degree (%) |
|---|---|---|---|---|---|---|---|---|
| Comparative Example 4 | 68.2 | 65.5 | 8.8 | 7.5 | 21.4 | 9.0 | 69.0 | 75.8 |

The present invention optimized the viscosity, oligomer content, molecular weight and its distribution, and moisture content of the polyamide 56 resin. Furthermore, the present invention optimized the spinning process of the polyamide 56 industrial yarn, improved its crystallinity and orientation degree, increased the setting temperature and winding overfeed ratio, and reduced the subsequent stress relaxation. The present invention thus provided a polyamide 56 industrial yarn with excellent mechanical properties and dimensional stability which has a break strength of 8.0 cN/dtex or more; an elongation at break of 26% or less; a dry heat shrinkage and a shrinkage in boiling water of 6% or less; a crystallinity of 70% or more; and an orientation degree of 80% or more.

The foregoing description of the embodiments was provided to facilitate those skilled in the art to understand and apply the present invention. It will be apparent to those skilled in the art that various modifications can be readily made to these embodiments. The generic principles described herein can be applied to other embodiments without creative labor. Therefore, the present invention is not limited to the above-mentioned embodiments. Improvements and modifications made by those skilled in the art according to the disclosure of the present invention without departing from the scope of the present invention should all fall within the protection scope of the present invention.

## Claims

1. A polyamide 5X industrial yarn, **characterized in that** the content of copper ions in the polyamide 5X industrial yarn is 10-1,000 ppm, and the polyamide 5X comprises any one of polyamide 56, polyamide 510, polyamide 512, polyamide 513 or polyamide 514.

2. The polyamide 5X industrial yarn according to claim 1, **characterized in that** the content of copper ions in the polyamide 5X industrial yarn is 30-500 ppm.

3. The polyamide 5X industrial yarn according to claim 1, **characterized in that** the content of copper ions in the polyamide 5X industrial yarn is 50-200 ppm.

4. The polyamide 5X industrial yarn according to claim 1, **characterized in that** the polyamide 5X industrial yarn has a heat-resistant break strength retention rate of 90% or more after being treated at 180°C for 4 hrs; and/or a heat-resistant break strength retention rate of 90% or more after being treated at 230°C for 30 mins; and/or the polyamide 5X industrial yarn has a dry heat shrinkage of 8.0% or less.

5. The polyamide 5X industrial yarn according to claim 1, **characterized in that** the polyamide 5X industrial yarn has a heat-resistant break strength retention rate of 93% or more after being treated at 180°C for 4 hrs; and/or a heat-resistant break strength retention rate of 92% or more after being treated at 230°C for 30 mins; and/or the polyamide 5X industrial yarn has a dry heat shrinkage of 6.0% or less.

6. A polyamide 5X industrial yarn, **characterized in that** the polyamide 5X industrial yarn comprises a heat stabilizer, and the heat stabilizer comprises any one of copper acetate, potassium iodide, copper chloride, cuprous iodide, copper oxide, cuprous oxide, or combination thereof; and the heat stabilizer is added in an amount of 10-2,800 ppm, based on the total weight of production raw materials.

7. The polyamide 5X industrial yarn according to claim 6, **characterized in that** the heat stabilizer is added in an amount of 100-2,500 ppm, based on the total weight of the production raw materials.

8. The polyamide 5X industrial yarn according to claim 6, **characterized in that** the heat stabilizer comprises a composition of potassium iodide and copper acetate, wherein the molar ratio of copper acetate to potassium iodide is 1:1-15.

9. The polyamide 5X industrial yarn according to claim 1 or claim 6, **characterized in that** the polyamide 5X industrial yarn has a break strength of 6.5 cN/dtex or more.

10. The polyamide 5X industrial yarn according to claim 1 or claim 6, **characterized in that** the polyamide 5X industrial yarn has a break strength of 7.0 cN/dtex or more.

11. The polyamide 5X industrial yarn according to claim 1 or claim 6, **characterized in that** the polyamide 5X industrial yarn has a break strength of 8.0 cN/dtex or more.

12. The polyamide 5X industrial yarn according to claim 1 or claim 6, **characterized in that** the oil-free yarn of the polyamide 5X industrial yarn has a relative viscosity of 2.7-4.5, and the absolute value of the difference between the relative viscosity of the oil-free yarn and the relative viscosity of its original resin is 0.12 or less.

13. The polyamide 5X industrial yarn according to claim 12, **characterized in that** the absolute value of the difference between the relative viscosity of the oil-free yarn of the polyamide 5X industrial yarn and the relative viscosity of its original resin is 0.10 or less, and more preferably 0.08 or less.

14. The polyamide 5X industrial yarn according to claim 1 or claim 6, **characterized in that** the oil-free yarn of the polyamide 5X industrial yarn has an amino content of 20-50 mmol/kg; and the absolute value of the difference between the amino content of the oil-free yarn and the amino content of its original resin is 5 or less.

15. The polyamide 5X industrial yarn according to claim 14, **characterized in that** the absolute value of the difference between the amino content of the oil-free yarn and the amino content of its original resin is 3 or less, and more preferably 2 or less.

16. The polyamide 5X industrial yarn according to claim 1 or claim 6, **characterized in that** the filament of the polyamide 5X industrial yarn breaks 2 times or less every 24 hrs, preferably 1 time or less every 24 hrs, and more preferably 0 time every 24 hrs; and the production yield of the polyamide 5X industrial yarn is 90% or more, preferably 93% or more, and more preferably 96% or more.

17. The polyamide 5X industrial yarn according to claim 1 or claim 6, **characterized in that** the polyamide 5X industrial yarn has a shrinkage in boiling water of 8.0% or less, preferably 7.0% or less, and more preferably 6.0% or less; and/or

   the polyamide 5X industrial yarn has a fineness of 100-3,500 dtex, preferably 200-2,500 dtex, and more preferably 300-1,800 dtex; and/or
   the polyamide 5X industrial yarn has an elongation at break of 26% or less, and preferably 22% or less; and/or
   the polyamide 5X industrial yarn has a crystallinity of 70% or more, preferably 72% or more, and more preferably 74% or more; and/or
   the polyamide 5X industrial yarn has an orientation degree of 80% or more, preferably 82% or more, and more preferably 84% or more.

18. The polyamide 5X industrial yarn according to claim 1 or claim 6, **characterized in that** raw materials for producing the polyamide 5X industrial yarn at least comprise 1,5-pentane diamine and adipic acid; or a polyamide 5X obtained by polymerizing 1,5-pentane diamine and adipic acid as monomers; preferably, the 1,5-pentane diamine is prepared from bio-based raw materials by a fermentation process or an enzymatic conversion process.

19. A process for producing the polyamide 5X industrial yarn according to any one of claims 1-18, **characterized in that** the process comprises the following steps:

   (1) polymerizing 1,5-pentane diamine and adipic acid to obtain a high-viscosity polyamide 5X melt, conveying the melt to a spinning beam by a melt booster pump, and spinning directly; or using chip spinning, that is, firstly preparing a low-viscosity polyamide 5X resin, then obtaining a high-viscosity polyamide 5X resin by solid phase tackifying, and heating the high-viscosity polyamide 5X resin into a molten state so as to form a polyamide 5X melt for spinning;
   (2) drawing the polyamide 5X melt obtained in Step (1) to form an as-spun yarn; and
   (3) processing the as-spun yarn to obtain the polyamide 5X industrial yarn;

      wherein a heat stabilizer is added during the polymerization of 1,5-pentane diamine and adipic acid in Step (1), or injected online in the form of a heat stabilizer masterbatch before cutting the polymer melt into pellets, or blended in the form of a heat stabilizer masterbatch during the spinning;
      the content of copper ions in the heat stabilizer masterbatch is 0.5-10 wt%, preferably 0.8-5 wt%, and more preferably 1.2-3 wt%;
      the heat stabilizer masterbatch is added in an amount of 0.3-5.0 wt%, preferably 0.5-3.0 wt%, and more preferably 0.8-2.0 wt%;
      the base material for the heat stabilizer masterbatch comprises any one of polyamide 6, polyamide 56, polyamide 66, polyamide 510, polyamide 610, polybutylene terephthalate, or combination thereof, and is preferably polyamide 6, polyamide 56 and/or polyamide 510, and more preferably polyamide 6 and/or polyamide 56; and/or

preferably, the process further comprises the step of adding other additive(s) comprising any one of matting agents, flame retardants, antioxidants, ultraviolet absorbers, infrared absorbers, crystal nucleating agents, fluorescent brighteners and anti-static agents, or combination thereof; preferably, the other additive(s) are added in an amount of 0.01-5 wt%, based on the total weight of the production raw materials.

**20.** The process according to claim 19, **characterized in that** Step (1) specifically comprises the following steps:

(1-1) mixing 1,5-pentane diamine, adipic acid and water uniformly under an inert gas or vacuum condition to obtain a polyamide 5X salt solution; wherein the molar ratio of 1,5-pentane diamine to adipic acid is (0.95-1.2): 1;

(1-2) heating the polyamide 5X salt solution, increasing the pressure in the reaction system to 0.3-2.5 MPa, degassing, maintaining the pressure, then reducing the pressure in the reaction system to 0-0.2 MPa, and evacuating to a vacuum degree of -(0.01-0.1) MPa (gauge pressure) to obtain a polyamide 5X melt;

wherein preferably, the temperature of the reaction system at the end of the pressure-maintenance is 230-275 °C; and/or

preferably, the temperature of the reaction system at the end of the pressure-reduction is completed is 240-285°C; and/or

preferably, the temperature at the end of evacuation is 265-295°C.

**21.** The process according to claim 19, **characterized in that** in Step (1),

the low-viscosity polyamide 5X resin in 96% sulfuric acid has a relative viscosity of 2.0-2.7, preferably 2.2-2.6, and more preferably 2.4-2.5; and/or

the high-viscosity polyamide 5X resin in 96% sulfuric acid has a relative viscosity of 2.7-4.5, preferably 3.2-4.0, and more preferably 3.4-3.6; and/or

the high-viscosity polyamide 5X resin has an oligomer content of 0.2-1.0 wt%, and preferably 0.4-0.6 wt%; and/or

the high-viscosity polyamide 5X resin has a number average molecular weight of 18,000-40,000, preferably 25,000-30,000, and/or has a molecular weight distribution of 0.8-1.8, preferably 1.2-1.5; and/or

the high-viscosity polyamide 5X resin has a moisture content of 200-800 ppm, preferably 300-750 ppm, more preferably 350-700 ppm, and further more preferably 400-600 ppm; and/or

the high-viscosity polyamide 5X resin has an amino content of 20-50 mmol/kg, preferably 24-45 mmol/kg, more preferably 28-40 mmol/kg, and further more preferably 32-36 mmol/kg; and/or

preferably, the heating in Step (1) is carried out in a screw extruder, and the screw extruder includes five heating zones;

wherein the temperature of a first zone is 250-290°C, the temperature of a second zone is 260-300°C, the temperature of a third zone is 270-320°C, the temperature of a fourth zone is 280-330°C, and the temperature of a fifth zone is 280-320°C.

**22.** The process according to claim 19, **characterized in that** Step (2) specifically comprises the following steps:

ejecting the polyamide 5X melt through the spinneret plate of the spinning beam to form the as-spun yarn; preferably, the temperature of the spinning beam is 270-330°C, more preferably 280-310°C, further more preferably 290-300°C, and still further more preferably 293-297°C; and/or

the pressure of the spin pack of the spinning beam is 8-25 MPa, preferably 12-20 MPa, and more preferably 15-18 MPa; and/or

the drawing ratio of the spinneret of the spinneret plate is 50-400, preferably 70-300, more preferably 80-200, and still further more preferably 90-100.

**23.** The process according to claim 19, **characterized in that** Step (3) specifically comprises the following steps:

thermally insulating, cooling, spin finishing, drawing, and winding into a shape the as-spun yarn which comes out of the spinneret orifices to obtain the polyamide 5X industrial yarn;

preferably, the thermal insulation is performed with a slow cooling device, wherein the slow cooling temperature is 150-280°C, more preferably 200-240°C, and the slow cooling length is 10-80 mm, more preferably 20-50 mm; the cooling is performed with quench air, the air speed of the quench air is 0.3-2.0 m/s, more preferably 0.6-1.5 m/s; the air temperature of the quench air is 15-25°C, more preferably 17-23°C, and further more preferably 19-22°C; and/or the humidity of the quench air is 60-80%, and more preferably 65-75%; and/or the winding tension during winding the as-spun yarn into a shape is 50-300 cN, preferably 80-200 cN, further more preferably 100-160 cN, and still further more preferably 120-140 cN; or

the winding speed is 2,000-3,800 m/min, preferably 2,500-3,500 m/min, and further more preferably 2,800-3,000 m/min; and/or the winding overfeed ratio is 5% or less, preferably 4% or less, and further more preferably 3% or less.

24. The process according to claim 19, **characterized in that** the drawing is performed in four or more stages;

preferably, the drawing process comprises: firstly, feeding the as-spun yarn, which has been spin finished, to a first pair of hot rollers through a godet roller, and performing a first-stage drawing between the first pair of hot rollers and a second pair of hot rollers; preforming a second-stage drawing between the second pair of hot rollers and a third pair of hot rollers; performing a third-stage drawing and a first thermal setting between the third pair of hot rollers and a fourth pair of hot rollers; and then performing a fourth-stage drawing and a second thermal setting between the fourth pair of hot rollers and a fifth pair of hot rollers;

wherein preferably the total drawing ratio is 4.0-6.0;

the temperature of the first thermal setting is 180-250°C, and preferably 200-240°C; and/or

the temperature of the second thermal setting is 200-240°C, and preferably 220-230°C.

25. Use of the polyamide 5X industrial yarn according to any one of claims 1 to 18 in the fields of sewing threads, tire cords, air bag yarns, release cloth, krama, canvas, safety belts, ropes, fishing nets, industrial filter cloth, conveyor belts, parachutes, tents, bags and suitcases.

## INTERNATIONAL SEARCH REPORT

| International application No. |
| --- |
| **PCT/CN2020/072240** |

| A. | CLASSIFICATION OF SUBJECT MATTER |
| --- | --- |
| | D01F 6/60(2006.01)i; D01F 1/10(2006.01)i |

According to International Patent Classification (IPC) or to both national classification and IPC

| B. | FIELDS SEARCHED |
| --- | --- |

Minimum documentation searched (classification system followed by classification symbols)

    D01F

Documentation searched other than minimum documentation to the extent that such documents are included in the fields searched

Electronic data base consulted during the international search (name of data base and, where practicable, search terms used)

    CNKI; CNABS; CNTXT; VEN; JPTXT; ISI WEB OF SCIENCE: 凯赛, 锦纶, 聚酰胺, 聚酰胺5#, 聚酰胺5##, 尼龙, 尼龙 5#, 尼龙5##, "PA", 热稳定, 铜, 钾, 戊二胺, 己二酸, 二元酸, 五亚甲基二胺, "ppm", "cu", nylon 5#, nylon 5##, nylon 56, polyamide5#, polyamide5##, diacid, dicarboxylic acid, binary acid, copper, Cuprous iodide, Copper chloride, Copper oxide, , Copper halide, Cuprous, Copper acetate, polycaprinlactam, Potassium Iodide, sebacamide, 銅, アジピン酸, ポリアミド5##, ナイロン5#, ナイロン5##, ペンチレンジアミン

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | JP 5644037 B2 (MITSUBISHI CHEMICAL CORPORATION) 24 December 2014 (2014-12-24)<br>    description paragraphs 33, 39 | 1-3, 6-7 |
| X | CN 102046859 A (TORAY INDUSTRIES et al.) 04 May 2011 (2011-05-04)<br>    description paragraphs 90, 120, embodiment 1, table 4 | 1-3, 6-7, 9-11, 18, 25 |
| Y | CN 102046859 A (TORAY INDUSTRIES et al.) 04 May 2011 (2011-05-04)<br>    description paragraphs 90, 120, embodiment 1, table 4 | 4-5, 17, 19-25 |
| Y | CN 106868624 A (CATHAY INDUSTRIAL BIOTECH LTD. et al.) 20 June 2017 (2017-06-20)<br>    description, paragraphs 5-77, and embodiment 1 | 4-5, 17, 19-25 |
| A | CN 106835329 A (CATHAY INDUSTRIAL BIOTECH LTD. et al.) 13 June 2017 (2017-06-13)<br>    entire document | 1-25 |

☑ Further documents are listed in the continuation of Box C.    ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **24 July 2020** | **06 August 2020** |

| Name and mailing address of the ISA/CN | Authorized officer |
| --- | --- |
| **China National Intellectual Property Administration (ISA/CN)**<br>**No. 6, Xitucheng Road, Jimenqiao Haidian District, Beijing 100088**<br>**China** | |
| Facsimile No. **(86-10)62019451** | Telephone No. |

Form PCT/ISA/210 (second sheet) (January 2015)

<table>
<tr><td colspan="2" style="text-align:center"><strong>INTERNATIONAL SEARCH REPORT</strong></td><td>International application No.<br><strong>PCT/CN2020/072240</strong></td></tr>
</table>

**C.    DOCUMENTS CONSIDERED TO BE RELEVANT**

| Category* | Citation of document, with indication, where appropriate, of the relevant passages | Relevant to claim No. |
|---|---|---|
| A | JP 4893652 A (TORA TORAY IND INC) 04 December 1973 (1973-12-04)<br>entire document | 1-25 |
| A | CN 106958046 A (CATHAY INDUSTRIAL BIOTECH LTD. et al.) 18 July 2017 (2017-07-18)<br>entire document | 1-25 |
| A | CN 106894106 A (CATHAY INDUSTRIAL BIOTECH LTD. et al.) 27 June 2017 (2017-06-27)<br>entire document | 1-25 |
| A | CN 106555250 A (SHANGHAI CATHAY BIOTECHNOLOGY RESEARCH CENTER CO., LTD. et al.) 05 April 2017 (2017-04-05)<br>entire document | 1-25 |
| A | CN 106868623 A (SHANGHAI CATHAY BIOTECHNOLOGY RESEARCH CENTER CO., LTD. et al.) 20 June 2017 (2017-06-20)<br>entire document | 1-25 |
| A | CN 109930230 A (CATHAY INDUSTRIAL BIOTECH LTD. et al.) 25 June 2019 (2019-06-25)<br>entire document | 1-3, 6, 7 |

Form PCT/ISA/210 (second sheet) (January 2015)

**INTERNATIONAL SEARCH REPORT**
Information on patent family members

International application No.

**PCT/CN2020/072240**

| Patent document cited in search report | | | Publication date (day/month/year) | Patent family member(s) | | | Publication date (day/month/year) |
|---|---|---|---|---|---|---|---|
| JP | 5644037 | B2 | 24 December 2014 | JP | 2009191156 | A | 27 August 2009 |
| CN | 102046859 | A | 04 May 2011 | CN | 102046859 | B | 25 September 2013 |
| | | | | EP | 2256237 | A4 | 03 August 2011 |
| | | | | JP | 4952846 | B2 | 13 June 2012 |
| | | | | BR | PI0910048 | A2 | 29 December 2015 |
| | | | | TW | I476304 | B | 11 March 2015 |
| | | | | PL | 2256237 | T3 | 30 August 2013 |
| | | | | TW | 200949029 | A | 01 December 2009 |
| | | | | EP | 2256237 | B1 | 27 February 2013 |
| | | | | ES | 2405580 | T3 | 31 May 2013 |
| | | | | US | 2011020628 | A1 | 27 January 2011 |
| | | | | WO | 2009119302 | A1 | 01 October 2009 |
| | | | | JP | WO2009119302 | A1 | 21 July 2011 |
| | | | | BR | PI0910048 | B1 | 26 February 2019 |
| | | | | EP | 2256237 | A1 | 01 December 2010 |
| | | | | IN | 291548 | B | 12 January 2018 |
| | | | | IN | 201006743 | P4 | 01 July 2011 |
| CN | 106868624 | A | 20 June 2017 | CN | 106868624 | B | 23 August 2019 |
| CN | 106835329 | A | 13 June 2017 | CN | 110616471 | A | 27 December 2019 |
| | | | | CN | 106835329 | B | 12 November 2019 |
| JP | 4893652 | A | 04 December 1973 | | None | | |
| CN | 106958046 | A | 18 July 2017 | CN | 106958046 | B | 23 August 2019 |
| CN | 106894106 | A | 27 June 2017 | CN | 106894106 | B | 26 July 2019 |
| CN | 106555250 | A | 05 April 2017 | CN | 106555250 | B | 05 June 2020 |
| CN | 106868623 | A | 20 June 2017 | | None | | |
| CN | 109930230 | A | 25 June 2019 | | None | | |

Form PCT/ISA/210 (patent family annex) (January 2015)

**EP 4 095 292 A1**

REFERENCES CITED IN THE DESCRIPTION

**Patent documents cited in the description**

- CN 110055602 A
- CN 109536542 A
- CN 108503826 A
- CN 108503824 A